# EUROPEAN PATENT APPLICATION

(11) **EP 4 663 997 A1**
(43) Date of publication of application: **17.12.2025**
(21) Application number: 24753611.3
(22) Date of filing: 06.02.2024
(51) Int. Cl.: F17C 5/06, H04W 4/40, H04W 8/00, H04W 4/80, H04W 84/12

(54) **COMMUNICATION METHOD AND DEVICE FOR HYDROGEN FUELING**

(30) Priority: 10.02.2023 KR 20230017970; 17.02.2023 KR 20230021259; 02.03.2023 KR 20230028088; 07.03.2023 KR 20230030220; 08.06.2023 KR 20230073799; 28.06.2023 KR 20230083285; 13.10.2023 KR 20230136537
(71) Applicant: Hyundai Motor Company, Seoul 06797 (KR); Kia Corporation, Seoul 06797 (KR); Myongji University Industry and Academia Cooperation Foundation, Gyeonggi-do 54538 (KR)
(72) Inventor: PARK, Cheol Woo, Hwaseong-si, Gyeonggi-do 18280 (KR); YOON, A Eun, Hwaseong-si, Gyeonggi-do 18280 (KR); KIM, Hyung Ki, Hwaseong-si, Gyeonggi-do 18280 (KR); SHIN, Ye Eun, Hwaseong-si, Gyeonggi-do 18280 (KR); SHIN, Min Ho, Yongin-si, Gyeonggi-do 17058 (KR)
(74) Representative: Hoffmann Eitle
(86) International application number: PCT/KR2024/001752
(87) International publication number: WO 2024/167286

(57) **Abstract**

A method according to an exemplary embodiment of the present disclosure comprises the steps of: negotiating a communication protocol with a dispenser for supplying, as fuel, hydrogen for mobility; negotiating, with the dispenser, a fuel supply protocol in order to receive, as fuel, the hydrogen from the dispenser; and negotiating, with the dispenser, fuel supply parameters based on the fuel supply protocol.

## Description

### TECHNICAL FIELD

The present disclosure relates to a communication technology for hydrogen fueling for a hydrogen fueled mobility and, more particularly, to a hydrogen fueling process for enhancing safety, compatibility, efficiency, and reliability of the hydrogen fueling, a method of negotiating a communication protocol, a fueling protocol, and fueling parameters for the hydrogen fueling process, and a device for implementing the process.

### BACKGROUND ART

The description in this section merely provides background information of embodiments of the present disclosure and is not intended to specify prior arts of the present disclosure.

A hydrogen vehicle or a hydrogen electric vehicle refers to a vehicle driven by electrical energy generated by a reaction of high-pressure hydrogen stored in the vehicle and oxygen in the air, and producing little pollution. Most hydrogen electric vehicles are driven by electricity generated by a fuel cell system utilizing the hydrogen as an energy source. The hydrogen electric vehicle not only exhausts pure water (H2O) vapor in the course of generating the electricity but also removes ultrafine dusts in the air while being driven, and thus are attracting attention as a future eco-friendly mobility. Since the fuel, i.e. hydrogen, is abundant on earth and the energy production process is eco-friendly, the hydrogen electric vehicle is spotlighted as a technology with the potential to be utilized across industries.

A hydrogen fueled mobility refers to a mobility that uses the hydrogen as an energy source or generates the electrical energy using the hydrogen as the fuel to drive an electric motor by the electrical energy. In addition to the hydrogen electric vehicle described above, the hydrogen fueled mobility may include an aerial mobility as well as an industrial truck, a train, a ship, and an aircraft that generate the electrical energy using the hydrogen as the fuel and is driven by the electrical energy.

The hydrogen electric vehicle produces electrical energy by supplying the high-pressure hydrogen stored safely in a hydrogen fuel storage tank and the oxygen introduced through an air supply system to a fuel cell stack and causing an electrochemical reaction between the hydrogen and the oxygen to occur. The electrical energy produced in the fuel cell stack is converted into kinetic energy through a motor to drive the hydrogen electric vehicle, and an operating hydrogen electric vehicle discharges only the pure water vapor through an exhaust port.

A hydrogen fueled car other than the hydrogen electric vehicle is also a vehicle that uses the hydrogen as the fuel. The hydrogen fueled car is driven by an electric motor which is rotated by heat generated by directly burning the hydrogen in the engine. The method of fueling/supplying the hydrogen for the hydrogen fueled car is not much different from the hydrogen fueling/supply method for the hydrogen electric vehicle.

The control scheme for fueling or supply hydrogen to the hydrogen fueled mobility aims to control the hydrogen fueling/supply such that a temperature and pressure of a compressed hydrogen storage system (CHSS) on the fuel cell side are maintained below a certain temperature limit and a pressure limit to ensure the safety.

The hydrogen fueling/supply process, the control scheme, and the protocol thereof in a conventional hydrogen electric vehicle had been stipulated before wired/wireless communications or computing techniques for the control became mature, and thus do not utilize the state-of-art information and communications technologies (ICT) to their full extent. Therefore, the conventional hydrogen fueling/supply subsystem in the hydrogen electric vehicle is inefficient, slow, and is not suitable for large-scale hydrogen fueling.

In particular, regarding hydrogen fueling communications, most hydrogen fueling control devices use unidirectional infrared communication devices for wireless communications, and thus still have limitations and vulnerabilities of the unidirectional communication.

### DISCLOSURE OF DISCLOSURE

### TECHNICAL PROBLEM

To solve the problems above, one object of exemplary embodiments is to provide a hydrogen fueling process for overcoming limitations and vulnerabilities of a conventional unidirectional communication in a hydrogen fueling process for a hydrogen fueled mobility and a communication protocol for the fueling protocol for the process, and for enhancing safety, compatibility, efficiency, and reliability of the hydrogen fueling, a method of negotiating a communication protocol, a fueling protocol, and fueling parameters for the hydrogen fueling process, and a device for implementing the process. Another object of exemplary embodiments is to provide a hydrogen fueling bidirectional communication process allowing a hydrogen fueled mobility and a dispenser to control for determining a conventional communication medium or an advanced communication medium in order to effectively achieve a hydrogen fueling goal, a communication protocol negotiation process taking into account bidirectional/unidirectional communications, and a device for implementing the processes.

### TECHNICAL SOLUTION

According to an aspect of an exemplary embodiment, a communication method for hydrogen fueling performed by a hydrogen fueled mobility includes: negotiating a communication protocol with a dispenser supplying hydrogen to the hydrogen fueled mobility; negotiating a fueling protocol for being fueled with hydrogen from the dispenser with the dispenser; and negotiating a fueling parameter based on the fueling protocol with the dispenser.

The operation of negotiating the communication protocol may include: transmitting a message including information on a first communication protocol applicable in the hydrogen fueled mobility to the dispenser; and receiving a message including information on a second communication protocol selected from common communication protocols commonly applicable in both the hydrogen fueled mobility and the dispenser from the dispenser.

The information on the first communication protocol may include at least one of an index of the first communication protocol, a name of the first communication protocol, a version of the first communication protocol, and a preference for the first communication protocol.

The message including the information on the second communication protocol further may include information on whether negotiating the communication protocol was successful.

The operation of negotiating the fueling protocol may include: transmitting a message including information on a first fueling protocol applicable in the hydrogen fueled mobility to the dispenser based on a result of a communication protocol negotiation; and receiving a message including information on a second fueling protocol selected from common fueling protocols commonly applicable in both the hydrogen fueled mobility and the dispenser from the dispenser

The information on the first fueling protocol may include at least one of an index of the first fueling protocol, a name of the first fueling protocol, a version of the first fueling protocol, a sub-protocol of the first fueling protocol, and a preference for the first fueling protocol.

The message including the information on the second fueling protocol may further include information on whether negotiating the fueling protocol was successful.

The operation of negotiating the fueling parameter may include: transmitting a message including information on fueling parameters of a hydrogen fueled mobility side required by a second fueling protocol selected as a result of a fueling protocol negotiation to the dispenser; and receiving a message including compatibility information of a dispenser side for the fueling parameters of the hydrogen fueled mobility side from the dispenser.

The operation of negotiating the fueling parameter may include: receiving a message including information on fueling parameters of a dispenser side required by a second fueling protocol selected as a result of a fueling protocol negotiation from the dispenser; and transmitting a message including compatibility information of a hydrogen fueled mobility side for the fueling parameters of the dispenser side to the dispenser.

The communication method for hydrogen fueling may further include: when it is determined during a fueling parameter negotiation that the fueling parameter is incompatible between the hydrogen fueled mobility and the dispenser, renegotiating at least one of the communication protocol and the fueling parameter.

The communication method for hydrogen fueling may further include: when it is determined during a fueling parameter negotiation that the fueling parameter is incompatible between the hydrogen fueled mobility and the dispenser, determining a third communication protocol and a third fueling protocol based on a prescribed policy; and allowing a supply of hydrogen based on the third communication protocol and the third fueling protocol.

The communication method for hydrogen fueling may further include: when it is determined during a fueling parameter negotiation that the fueling parameter is incompatible between the hydrogen fueled mobility and the dispenser, terminating a communication between the dispenser and the hydrogen fueled mobility.

The communication method for hydrogen fueling may further include performing a discovery and pairing process with the dispenser using a first communication technology.

When a result of a communication protocol negotiation is related to a second communication technology, negotiating the fueling protocol and negotiating the fueling parameter may be performed using the second communication technology.

Information on interoperability or compatibility between the hydrogen fueled mobility and the dispenser may be shared while the discovery and pairing process is performed.

According to another aspect of an exemplary embodiment, a communication device for hydrogen fueling arranged in a hydrogen fueled mobility includes: a memory storing at least one instruction; and a processor executing the at least one instruction. The processor, when executing the at least one instruction, is configured to: negotiate a communication protocol with a dispenser supplying hydrogen to the hydrogen fueled mobility; negotiate a fueling protocol for being fueled with hydrogen from the dispenser with the dispenser; and negotiate a fueling parameter based on the fueling protocol with the dispenser.

When negotiating the communication protocol, the processor may transmit a message including information on a first communication protocol applicable in the hydrogen fueled mobility to the dispenser, and receive a message including information on a second communication protocol selected from common communication protocols commonly applicable in both the hydrogen fueled mobility and the dispenser from the dispenser.

The information on the first communication protocol may include at least one of an index of the first communication protocol, a name of the first communication protocol, a version of the first communication protocol, and a preference for the first communication protocol. The message including the information on the second communication protocol may further include information on whether negotiating the communication protocol was successful.

When negotiating the fueling protocol, the processor may transmit a message including information on a first fueling protocol applicable in the hydrogen fueled mobility to the dispenser based on a result of a communication protocol negotiation, and receive a message including information on a second fueling protocol selected from common fueling protocols commonly applicable in both the hydrogen fueled mobility and the dispenser from the dispenser.

The information on the first fueling protocol may include at least one of an index of the first fueling protocol, a name of the first fueling protocol, a version of the first fueling protocol, a sub-protocol of the first fueling protocol, and a preference for the first fueling protocol. The message including the information on the second fueling protocol may further include information on whether negotiating the fueling protocol was successful.

When negotiating the fueling parameter, the processor may transmit a message including information on fueling parameters of a hydrogen fueled mobility side required by a second fueling protocol selected as a result of a fueling protocol negotiation to the dispenser, and receive a message including compatibility information of a dispenser side for the fueling parameters of the hydrogen fueled mobility side from the dispenser.

When negotiating the fueling parameter, the processor may receive a message including information on fueling parameters of a dispenser side required by the second fueling protocol selected as a result of a fueling protocol negotiation from the dispenser, and transmit a message including compatibility information of the hydrogen fueled mobility side for the fueling parameters of the dispenser side to the dispenser.

The processor, when executing the at least one instruction, may be further configured to: when it is determined during a fueling parameter negotiation that the fueling parameter is incompatible between the hydrogen fueled mobility and the dispenser, renegotiate at least one of the communication protocol and the fueling parameter

The processor, when executing the at least one instruction, may be further configured to: when it is determined during a fueling parameter negotiation that the fueling parameter is incompatible between the hydrogen fueled mobility and the dispenser, determine a third communication protocol and a third fueling protocol based on a prescribed policy. In this case, hydrogen may be supplied based on the third communication protocol and the third fueling protocol.

The processor, when executing the at least one instruction, may be further configured to: when it is determined during a fueling parameter negotiation that the fueling parameter is incompatible between the hydrogen fueled mobility and the dispenser, terminate a communication between the dispenser and the hydrogen fueled mobility.

The processor, when executing the at least one instruction, may be further configured to perform a discovery and pairing process with the dispenser using a first communication technology. When a result of a communication protocol negotiation is related to a second communication technology, the processor may negotiate the fueling protocol and the fueling parameter using the second communication technology.

While the discovery and pairing process is performed, information on interoperability or compatibility between the hydrogen fueled mobility and the dispenser may be shared.

According to another aspect of an exemplary embodiment, a communication method for hydrogen fueling performed by a dispenser supplying hydrogen to a hydrogen fueled mobility includes: negotiating a communication protocol with the hydrogen fueled mobility; negotiating a fueling protocol for supplying hydrogen as fuel to the hydrogen fueled mobility with the hydrogen fueled mobility; and negotiating a fueling parameter based on the fueling protocol with the hydrogen fueled mobility.

According to another aspect of an exemplary embodiment, a communication device for hydrogen fueling arranged in a dispenser supplying hydrogen to a hydrogen fueled mobility includes: a memory storing at least one instruction; and a processor executing the at least one instruction. The processor, when executing the at least one instruction, is configured to: negotiate a communication protocol with the hydrogen fueled mobility; negotiate a fueling protocol for supplying hydrogen as fuel to the hydrogen fueled mobility with the hydrogen fueled mobility; and negotiate a fueling parameter based on the fueling protocol with the hydrogen fueled mobility.

### ADVANTAGEOUS EFFECTS

According to the communication method for hydrogen fueling the device for implementing the method, i.e. a hydrogen fueling controller or a communication controller, according to an exemplary embodiment the present disclosure, it is possible to overcome limitations and vulnerabilities of a conventional unidirectional communication in the hydrogen fueling process for the hydrogen fueled mobility including a fuel cell electric vehicle (FCEV) or a hydrogen fuel engine and a communication protocol for the fueling protocol for the process, and to enhance the safety, compatibility, efficiency, and reliability of the hydrogen fueling.

An exemplary embodiment of the present disclosure may provide a method of negotiating a communication protocol and exchanging communication parameters for the hydrogen fueling and communication protocol fallback rules, in which the mobility and the dispenser may select the hydrogen fueling protocol and the communication protocol required to execute the hydrogen fueling protocol according to use cases while considering priorities according to a preference of the mobility or the dispenser, maximizing the interoperability between the mobility and the dispenser, and considering the backward compatibility.

An exemplary embodiment of the present disclosure may provide rules and procedures required for a communication protocol negotiation, a fueling protocol negotiation, and an exchange of fueling parameters to enable the mobility and the dispenser to collaboratively determine a conventional communication medium or an advanced communication medium efficiently for effectively achieving the hydrogen fueling goal.

### DESCRIPTION OF DRAWINGS

FIG. 1 is an illustration of a hydrogen fueling system for a hydrogen electric vehicle (FCEV) suitable for applying a bidirectional communication process for hydrogen fueling according to an exemplary embodiment of the present disclosure;
FIG. 2 is a partially enlarged view of a physical engagement structure between the FCEV and the dispenser in the hydrogen fueling system of FIG. 1;
FIG. 3 is a graph showing a state change of hydrogen fuel occurring during a hydrogen fueling process in the hydrogen fueling system of FIG. 1;
FIG. 4 illustrates a framework for functional blocks for performing a series of hydrogen fueling procedure that may employ the bidirectional communication process for hydrogen fueling according to an exemplary embodiment of the present disclosure;
FIG. 5 illustrates an example of a communication stack related to the use cases that may be employed in the bidirectional communication process for hydrogen fueling according to an exemplary embodiment of the present disclosure, based on the open systems interconnection reference model (OSI) 7 layers;
FIG. 6 is a sequence diagram illustrating a pairing process of the discovery and pairing procedure that may be employed in the bidirectional communication process for hydrogen fueling according to an exemplary embodiment of the present disclosure;
FIG. 7 illustrates examples of a backward compatibility that may be employed in the bidirectional communication process for hydrogen fueling according to an exemplary embodiment of the present disclosure;
FIG. 8 is a table summarizing examples of backward compatibilities applicable in the bidirectional communication process for hydrogen fueling according to an exemplary embodiment of the present disclosure;
FIG. 9 illustrates use classifications of communication data (UCDC) applicable in the bidirectional communication process for hydrogen fueling according to an exemplary embodiment of the present disclosure and backward compatibilities in the use classifications of communication data;
FIG. 10 is a sequence diagram illustrating an authorization process during a communication security procedure that may be employed in the bidirectional communication process for hydrogen fueling according to an exemplary embodiment of the present disclosure;
FIG. 11 is a sequence diagram illustrating a communication protocol negotiation procedure that may be employed in the bidirectional communication process for hydrogen fueling according to an exemplary embodiment of the present disclosure;
FIG. 12 is a sequence diagram illustrating a fueling protocol negotiation procedure during a bidirectional communication process for hydrogen fueling according to an exemplary embodiment of the present disclosure;
FIG. 13 is a sequence diagram illustrating a fueling parameter exchange/negotiation procedure that may be employed in the bidirectional communication process for hydrogen fueling according to an exemplary embodiment of the present disclosure;
FIG. 14 is a conceptual diagram illustrating a table summarizing parameters transferred from a mobility side to a dispenser side in a fueling parameter exchange/negotiation process according to an exemplary embodiment of the present disclosure;
FIG. 15 is a conceptual diagram illustrating a table summarizing parameters transferred from the dispenser side to the mobility side in a fueling parameter exchange/negotiation process according to an exemplary embodiment of the present disclosure; and
FIG. 16 is a schematic block diagram illustrating a physical configuration of a generalized computing system that may be operating as a communication device, a communication controller, and/or an electronic controller for hydrogen fueling and may be mounted on the hydrogen fueled mobility, a dispenser, and/or a fueling station according to an exemplary embodiment of the present disclosure.

### BEST MODE

In addition to the above objects, another objects and features of the present disclosure will become more apparent through the description of exemplary embodiments with reference to the accompanying drawings.

For a clearer understanding of the features and advantages of the present disclosure, exemplary embodiments of the present disclosure will be described in detail with reference to the accompanied drawings. However, it should be understood that the present disclosure is not limited to particular embodiments disclosed herein but includes all modifications, equivalents, and alternatives falling within the spirit and scope of the present disclosure.

The terminologies including ordinals such as "first" and "second" designated for explaining various components in this specification are used to discriminate a component from the other ones but are not intended to be limiting to a specific component. For example, a second component may be referred to as a first component and, similarly, a first component may also be referred to as a second component without departing from the scope of the present disclosure. As used herein, the term "and/or" may include a presence of one or more of the associated listed items and any and all combinations of the listed items.

In the description of exemplary embodiments of the present disclosure, "at least one of A and B" may mean "at least one of A or B" or "at least one of combinations of one or more of A and B". In addition, in the description of exemplary embodiments of the present disclosure, "one or more of A and B" may mean "one or more of A or B" or "one or more of combinations of one or more of A and B".

When a component is referred to as being "connected" or "coupled" to another component, the component may be directly connected or coupled logically or physically to the other component or indirectly through an object therebetween. Contrarily, when a component is referred to as being "directly connected" or "directly coupled" to another component, it is to be understood that there is no intervening object between the components. Other words used to describe the relationship between elements should be interpreted in a similar fashion.

The terminologies are used herein for the purpose of describing particular exemplary embodiments only and are not intended to limit the present disclosure. The singular forms include plural referents as well unless the context clearly dictates otherwise. Also, the expressions "comprises," "includes," "constructed," "configured" are used to refer a presence of a combination of stated features, numbers, processing steps, operations, elements, or components, but are not intended to preclude a presence or addition of another feature, number, processing step, operation, element, or component.

Unless defined otherwise, all terms used herein, including technical or scientific terms, have the same meaning as commonly understood by those of ordinary skill in the art to which the present disclosure pertains. Terms such as those defined in a commonly used dictionary should be interpreted as having meanings consistent with their meanings in the context of related literatures and will not be interpreted as having ideal or excessively formal meanings unless explicitly defined in the present application.

Terms used in the present disclosure are defined as follows.

A hydrogen electric vehicle may generally include a hydrogen fuel cell electric vehicle (FCEV) that uses a fuel cell and a vehicle with an internal combustion engine (ICE)that uses hydrogen as fuel. The hydrogen electric vehicle may also be referred to simply as an FCEV.

Although embodiments related to the hydrogen fuel cell vehicle are described in detail below, the ICE-based hydrogen vehicle using the hydrogen as fuel may be used in another embodiment of the present disclosure. In the following description, a hydrogen fueling protocol and/or a hydrogen fueling communication protocol is described with a focus on a hydrogen fuel cell vehicle. However, the hydrogen fueling protocol and/or the hydrogen fueling communication protocol may also be applicable to the ICE-based hydrogen vehicle according to another embodiment of the present disclosure.

Hydrogen fluid fuel may include gaseous hydrogen fuel or liquid hydrogen fuel.

"Compressed Hydrogen Storage System (CHSS)": An apparatus including at least one tank mounted on a vehicle to compress and store the hydrogen.

"Pressure Relief Device (PRD)": A device disposed in the CHSS and capable of isolating stored hydrogen from the other part of the fueling system and environment and exhausting the hydrogen to the outside.

"Hydrogen fueling": A process of supplying the high-pressure hydrogen from a dispenser of a hydrogen fueling station to the vehicle to accumulate the hydrogen in the tank of the vehicle. The hydrogen fueling may also be referred to as "fueling" in terms of supplying hydrogen fuel to the hydrogen electric vehicle. That is, the term "fueling," "hydrogen fueling," or "charging" used herein may mean supplying the hydrogen fuel. For example, a fueling protocol may be referred to as a fueling protocol, a fueling session may be referred to as a fueling session, and a fueling method may be referred to as a hydrogen fueling method or a fueling method.

"Pressure Ramp Rate (PRR)": An increase rate of a pressure of CHSS and measured in mega-pascals per minute (MPa/min).

"Average Pressure Ramp Rate (APRR)": An average of the increase rate of the pressure from the beginning to the end of the hydrogen fueling.

"Precooling": A process of cooling the hydrogen in a hydrogen fueling station before the fueling.

"Dispenser": A component supplying precooled hydrogen to the CHSS. The dispenser may be arranged at the hydrogen fueling station to perform a hydrogen fueling operation between the hydrogen storage tank of the hydrogen fueling station and the CHSS of the vehicle.

"Nozzle": A device that is connected to a hydrogen dispensing system of the hydrogen fueling station and may be coupled to a receptacle of the hydrogen electric vehicle and to supply the hydrogen fuel to the hydrogen electric vehicle.

"Fueling session": A communication session occurring over an entire range of use cases for the hydrogen fueling.

"Interoperability": A state in which components of a system interwork with corresponding components of the system to perform operations aimed by the system. Additionally, information interoperability may refer to capability that two or more networks, systems, devices, applications, or components may efficiently share and easily use information without causing inconvenience to users.

The correlation or association process may include a process of establishing a relationship between two peer communication entities.

"Command and control communications": Communications for exchanging information required for initiating, controlling, and terminating a hydrogen fueling process between a hydrogen dispenser and a hydrogen fueled mobility.

Meanwhile, although embodiments related to hydrogen electric vehicles or fuel cell electric vehicles (FCEVs) are described in detail below, it will be apparent to those skilled in the art that the inventive concept of the present disclosure may be applied to various types of hydrogen fueled mobility. A hydrogen fueled mobility refers to a mobility that uses the hydrogen as an energy source or generates the electrical energy using the hydrogen as the fuel to drive an electric motor by the electrical energy. In addition to the hydrogen electric vehicle described above, the hydrogen fueled mobility may include an aerial mobility as well as an industrial truck, a train, a ship, and an aircraft that generate the electrical energy using the hydrogen as the fuel and is driven by the electrical energy.

In addition, a bidirectional communication process hydrogen fueling of the present disclosure may be partially applicable to a building or a facility using the hydrogen as an energy source in addition to the hydrogen fueled mobility.

In the following description, the hydrogen fuel may include at least one of the gaseous hydrogen and the liquid hydrogen. The hydrogen fuel basically means compressed hydrogen but is not limited thereto.

In addition, although the bidirectional communication process for hydrogen fueling is described in terms of the hydrogen electric vehicle (FCEV) for convenience of explanation, the present disclosure is not limited thereto, and the hydrogen fueling bidirectional communication process may be applicable to the hybrid electric vehicle (EV) using the hydrogen as fuel or the ICE-based vehicle, also.

In the below description, some or all of the processes of the communication method, the communication protocol negotiation method, the hydrogen fueling protocol negotiation method, and the hydrogen fueling parameter negotiation method performed by the hydrogen fueled mobility may be performed by an electronic control unit (ECU), a communication device, or a communication controller of the hydrogen fueled mobility.

In the below description, some or all of the processes of the communication method, the communication protocol negotiation method, the hydrogen fueling protocol negotiation method, the hydrogen fueling parameter negotiation method, the hydrogen fueling method, and the hydrogen fueling control method performed by the dispenser may be performed by a controller, an electronic control unit, a communication device, or a communication controller of the dispenser. Alternatively, some of the processes of the above methods may be performed by a controller, an electronic control unit, a communication device, or a communication controller of a fueling station associated with the dispenser.

Meanwhile, one or more conventional components may be included in a configuration of the present disclosure if necessary, and such components will be described herein to an extent that it does not obscure the technical idea and concept of the present disclosure. If the description of the conventional components may obscure the technical idea and concept of the present disclosure, however, detailed description of such components may be omitted for simplicity. However, the present disclosure is not intended to claim the conventional component, and the conventional component may be included as an elements of the device or method of the present disclosure without deviating from the concept or spirit of the present disclosure.

For example, the communications between a dispenser and a vehicle may be implemented using conventional technologies, e.g., IrDA technology for a unidirectional communication, short-range wireless communication technology such as Bluetooth, WLAN, and UWB for a bidirectional communication, and wired communication technology for the unidirectional or bidirectional communication. At least some of the conventional technologies may be applied as a base technology for implementing the present disclosure.

Exemplary embodiments of the present disclosure will now be described in detail with reference to the accompanying drawings.

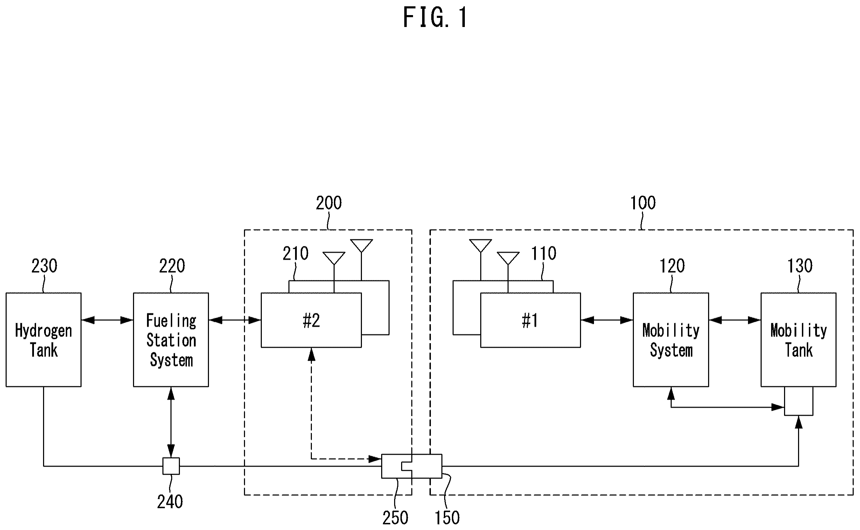

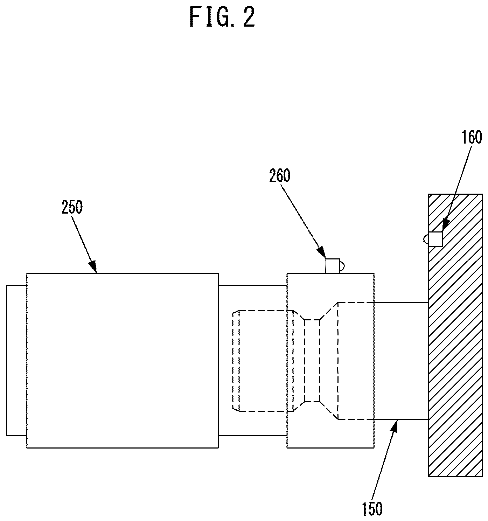

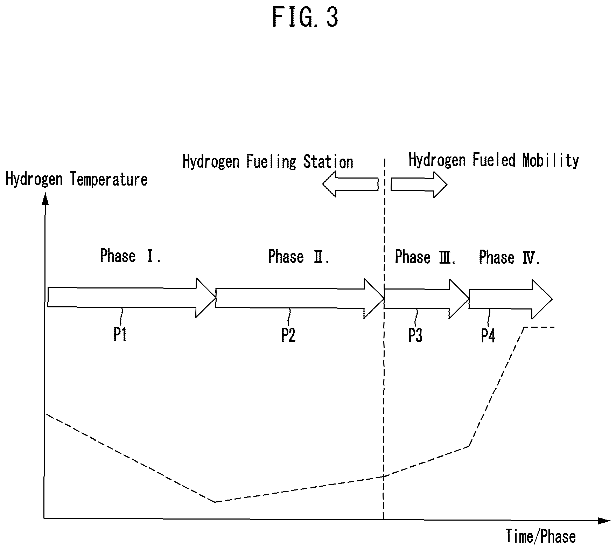

FIG. 1 is an illustration of a hydrogen fueling system for a hydrogen electric vehicle (FCEV) suitable for applying a bidirectional communication process for hydrogen fueling according to an exemplary embodiment of the present disclosure. FIG. 2 is a partially enlarged view of a physical engagement structure between the FCEV and the dispenser in the hydrogen fueling system of FIG. 1. FIG. 3 is a graph showing a state change of hydrogen fuel occurring during a hydrogen fueling process in the hydrogen fueling system of FIG. 1.

Referring to FIG. 1, the hydrogen fueling system may generally be configured to include a hydrogen fueling station and a hydrogen fueled mobility 100.

The hydrogen fueled mobility 100 may be equipped with an electronic controller 110, a mobility system 120, a mobility tank 130, and a receptacle 150 for the hydrogen fueling in addition to mechanical devices, electrical devices, electronic devices, and communication devices basically required for the vehicle.

The electronic controller 110 may transmit and receive signals and data to and from the hydrogen fueling station or an electronic controller 210 of the hydrogen fueling station by a wired or wireless communication and process the signals and data to control the hydrogen fueling on the vehicle side. The electronic controller 110 may be implemented by at least a portion of another electronic control unit mounted on the vehicle and may be referred to as a first electronic controller or an electronic control unit #1.

The mobility system 120 may be connected to the first electronic controller 110 and may be configured to control the hydrogen fueling or a hydrogen discharging of the mobility tank 130 according to a signal or command from the first electronic controller 110 and monitor a status of the mobility tank 130. The mobility system 120 may include a component that controls the operation of the fuel cell system or performs such control operations depending on the implementation, or may be configured to be combined with the component. The mobility system 120 may perform a vehicle safety function and may be referred to as a vehicle safety system.

There may be at least one, preferably a plurality of vehicle tanks 130 in the vehicle. The mobility tank 130 may compress and store the hydrogen supplied from the hydrogen fueling station under a control of the vehicle safety system, and may discharge the stored hydrogen.

In addition, the mobility tank 130 may correspond to a hydrogen storage system installed in the vehicle. In such a case, the hydrogen storage system may include a high-pressure hydrogen storage tank, a pressure control device, a high-pressure pipe, and an external frame. The high-pressure hydrogen storage tank may have a capacity of tens to hundreds of liters, and may has a shape that small storage tanks are connected in parallel. A boss unit allowing a passage of the hydrogen fuel may be combined to the high-pressure hydrogen storage tank, and thus the fueling and the discharging of the hydrogen may be controlled through the boss unit. The boss unit may include a valve, a pressure reducing device, and various sensors for measurements. Such a hydrogen storage system is known as compressed hydrogen storage systems (CHSS). The term "vehicle tank" used herein may refer to the CHSS for convenience of explanation.

The hydrogen fueled mobility100 may be equipped with a fuel cell system including a fuel cell stack, but the present disclosure is not limited thereto. The hydrogen fueled mobility 100 may be referred to simply as "FCEV", "vehicle", or "mobility" for convenience of explanation. The term "vehicle" or "mobility" used herein may be understood to include a hydrogen fueled vehicle or hydrogen fueled mobility using the hydrogen as fuel in addition to the hydrogen electric vehicle.

The hydrogen fueling station may include a dispenser 200, the electronic controller 210, a fueling station system 220, a hydrogen tank 230, a station box 240, and a nozzle 250.

The dispenser 200 may supply the hydrogen from the hydrogen tank 230 to the vehicle through a nozzle 250 securely coupled to the receptacle 150 of the vehicle under a control of the fueling station system 220. The dispenser 200 may include the electronic controller 210 inside a housing, but the present disclosure is not limited thereto. The nozzle 250 may be installed at an end of a cable that extends a certain length outside the housing of the dispenser 200.

The electronic controller 210 may transmit and receive signals and data to and from the first electronic controller 110 of the vehicle by a wired or wireless communication and process the signals and data to control the hydrogen fueling on the hydrogen fueling station side. The electronic controller 210 may exchange prescribed signals and data with the fueling station system 220. The electronic controller 210 may also be referred to as the second electronic controller or an electronic control unit #2.

Each of the first electronic controller 110 and the second electronic controller 210 may be comprised of a plurality of electronic control units, and may be configured such that each communication protocol may be executed by different electronic control units. Such a configuration may be useful when a falling back is used for backward compatibility and when a bidirectional communication cannot be used and a unidirectional communication may be used be used instead. In addition, the configuration may be useful in case where a combination of different communication methods is used, for example, when NFC is used for a pairing and WiFi is used for an actual fueling.

The fueling station system 220 may monitor or control pressure, speed, and temperature of the hydrogen discharged from the hydrogen tank 230 according to the signal and/or data from the second electronic controller. To this end, the fueling station system 220 may control an operation of the station box 240 connected to a discharging port or a discharging valve of the hydrogen tank 230. The fueling station system 220 may also be referred to as the fueling station safety system.

In an exemplary embodiment of the present disclosure, a communication entity related to the dispenser 200 for communicating with the vehicle/mobility 100 may be the electronic controller 210 or may be a separate communication device mounted on the dispenser 200. Alternatively, an electronic controller or a separate communication device in the fueling station system 220 may communicate with the vehicle/mobility 100 in place of the dispenser 200.

In another exemplary embodiment of the present disclosure, a communication control device in the vehicle/mobility 100 for communicating with the dispenser 200 side may be the first electronic controller 110 or may be a separate communication control device.

The hydrogen tank 230 stores the hydrogen or compressed hydrogen. The hydrogen tank 230 may discharge stored hydrogen at a predetermined pressure or speed under a control of the fueling station safety system 220. The hydrogen tank may also be referred to as a hydrogen storage tank.

The station box 240 may be provided with a control valve having an inlet connected to the discharging port or discharging valve of the hydrogen tank 230 and an outlet connected to the dispenser 200 or the nozzle 250 coupled to the dispenser 200. The station box 240 may be provided with a means for controlling the pressure, speed, and temperature of the discharged hydrogen, or another component performing such a function. In addition, the station box 240 may be provided with sensors for measuring the pressure, speed, and temperature of the discharged hydrogen.

The nozzle 250 may be connected to a hydrogen fueling system of the dispenser 200 through a conduit or flexible pipe of a predetermined length. The nozzle 250 may be provided with a shape and structure that tightly and firmly engages with the receptacle of the vehicle.

As shown in FIG. 2, the nozzle 250 may be engaged with the receptacle 150. A first sensor 160 installed in the vehicle and a second sensor 260 attached to the nozzle 250 may transmit signals or information regarding the coupling status of the nozzle 250 and the receptacle 150 to the first electronic controller or the vehicle safety system and to the second electronic controller or the fueling station safety system.

Pre-cooled hydrogen fuel may be supplied from the hydrogen fueling station to the hydrogen fueled mobility 100 through the dispenser 200. At this time, the hydrogen fueling process may be described by parameters including the pressure increase rate (PRR) and/or the average pressure increase rate (APRR).

The dispenser 200 may be in charge of an interface between the hydrogen fueling station and the mobility 100. The dispenser 200 may be configured to control a target pressure and an injection speed for the hydrogen fueling based on information indirectly acquired from the mobility tank 130 and fueling information of the hydrogen fueling station.

Conventionally, there are two methods of transmitting information from the mobility100 to the dispenser 200: a communication method and a non-communication method. In case of the communication method, the temperature and pressure values of the mobility tank 130 of the mobility 100 are transmitted to the dispenser 200 in a unidirectional manner, and the dispenser 200 does not actively utilize the information but utilizes the information only as a safety reference for an emergency stop at a temperature or pressure limit, for example. Furthermore, the hydrogen fueling protocol for safe and speedy fueling is managed by the dispenser 200, which has only a minimal safety management device that automatically releases the hydrogen through the pressure relief device (PRD) without any active safety management scheme for the mobility tank 130.

Meanwhile, in order to cope with a phenomenon that the temperature of hydrogen gas increases during hydrogen fueling depicted in FIG. 3, the hydrogen fueling station may be equipped with a pre-cooler. The pre-cooler may lower the temperature of hydrogen fuel through pre-cooling. The pre-cooler may be installed in or combined with at least one of the hydrogen tank 230 and the station box 240. Alternatively, the pre-cooler may be installed in or combined with a pipe transporting the hydrogen in the hydrogen fueling station.

The dispenser 200 or the second electronic controller may be equipped with a fueling control logic, which may control the hydrogen fueling process based on state information such as the temperature and pressure of the hydrogen fuel supplied to the vehicle or charged in the mobility tank 130, and fueling state information such as a state of charge (SOC) of the CHSS.

As described above, the hydrogen fueling process between the hydrogen fueled mobility 100 and the hydrogen fueling station is controlled by the dispenser 200, and the dispenser 200 may include a protocol for supplying the hydrogen fuel to the vehicle according to a prescribed procedure. This hydrogen fueling protocol may also be installed in the vehicle. The protocol installed in the vehicle or the dispenser 200 may include at least some of communication protocols based on SAE standards, ISO standards, or similar standards.

For minimum safety requirements, simulations based on a thermodynamic modeling may be performed for various situations, and a table-based or MC-formula based partial real-time correction may be performed utilizing parameters derived from the simulation. The minimum safety requirements may include upper limits on the temperature and pressure conditions of the CHSS and a guideline for the fueling rate (SOC).

In case that state values related to the hydrogen fueling are not actively controlled in the dispenser 200, the table-based correction has disadvantageous may show a very low efficiency because the temperature of the precooled hydrogen fuel provided by the fueling station or the temperature of the mobility tank 130 measured in the mobility 100 is not utilized, and thus it may be difficult to flexibly respond to changes in surrounding conditions. The MC-Formula based correction allows to compensate the temperature of the precooled hydrogen fuel in real time, but a calculation and an application of the method are complicated, which may put a limitation in the application and making it difficult to expand. As a result, the conventional communication protocols which were developed with a primary goal of completing the fueling safely, cannot actively respond to unexpected situations such as an excessive pre-cooling or an overheating of the mobility tank 130 and may bring about problems such as increased operating costs caused by the overcooling and a delayed fueling caused by the overheating.

For example, when the hydrogen fuel is supplied into the mobility tank 130, an internal temperature of the vehicle tank rises due to a compression heat, and thus the temperature of the hydrogen fuel inside the vehicle tank rises. The vehicle tank is designed such that a dome and a body of the vehicle tank of the vehicle tank are wrapped with carbon fiber having a low thermal conductivity to block a heat exchange between external atmosphere and the hydrogen fuel stored in the vehicle tank. Therefore, when the temperature of the hydrogen fuel inside the vehicle tank rises during the fueling process, the temperature rise revealed on a surface of the vehicle tank may be small compared with the internal temperature rise until the fueling is completed because of the low thermal characteristics of the vehicle tank.

Meanwhile, the temperature control of the hydrogen fueling process may aim to ensure that the internal temperature of the mobility tank 130 is kept as or below 85°C at the time of the completion of the fueling by supplying the pre-cooled hydrogen gas. During the hydrogen fueling process, the temperature of the hydrogen fuel may undergo a change according to a characteristic curve shown in FIG. 3. The temperature of the hydrogen fuel may decrease at a constant rate in phase 1 (P1) which is a pre-cooling stage of the hydrogen fueling station. In phase 2 (P2) during which the hydrogen fuel is supplied from the hydrogen fueling station to hydrogen mobility such as the vehicle, the temperature of the hydrogen fuel gradually increases due to a thermal mass of the hydrogen fueling station. In phase 3 (P3) during which the hydrogen fuel is transferred inside the vehicle to the vehicle tank, the temperature of the hydrogen fuel increases at a higher increasing rate due to a thermal mass of the vehicle. In phase 4 (P4) during which the hydrogen fuel is compressed and stored in the vehicle tank, the temperature of the hydrogen fuel may rapidly increase due to compression heat.

According to the present embodiment, the hydrogen fueling procedure may be performed effectively by an active state variable control reflecting real-time measurement data through a bidirectional communication process for hydrogen fueling. In addition, a hydrogen fueling protocol for the procedure may be provided.

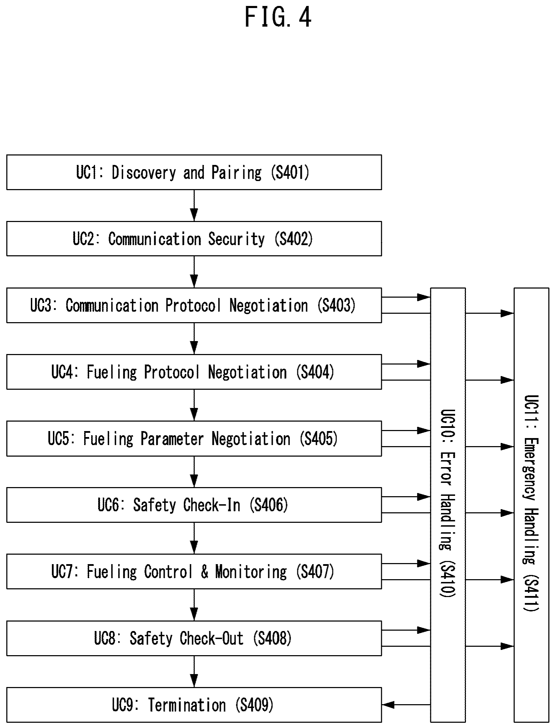

FIG. 4 illustrates a framework for functional blocks for performing a series of hydrogen fueling procedure that may employ the bidirectional communication process for hydrogen fueling (hereinbelow, referred to as "hydrogen fueling framework") according to an exemplary embodiment of the present disclosure.

Referring to FIG. 4, the hydrogen fueling framework may include functional blocks for respective use cases (UCs) including a discovery and pairing functional block (hereinbelow, referred to simply as "UC1" or "UC-1"), a communication security functional block (UC2 or UC-2), a communication protocol negotiation functional block (UC3 or UC-3), a fueling protocol negotiation functional block (UC4 or UC-4), a fueling parameter negotiation functional block (UC5 or UC-5), a safety check-in functional block (UC6 or UC-6), a fueling control and monitoring functional block (UC7 or UC-7), a safety check-out functional block (UC8 or UC-8), a termination functional block (UC9 or UC-9), an error handling functional block (UC10 or UC-10), and an emergency handling functional block (UC11 or UC-11).

The function blocks UC1 through UC11 may correspond to time-series operations S401 through S411, respectively, as shown in FIG. 4. In this case, FIG. 4 may also be understood as a flowchart including the time-series operations S401 through S411.

The use cases UC10 and UC11 may be individually connected to the use cases UC3 through UC8 and may perform the error handling and/or the emergency handling in each use case.

The use cases are functional blocks collectively providing the entire hydrogen fueling procedures of the hydrogen fueling system in a consistent manner for safe and secure fueling communication. The vehicle and the dispenser may perform the use cases sequentially in a certain order to achieve the hydrogen fueling.

After the nozzle of the dispenser is coupled to the receptacle of the vehicle, the vehicle and the dispenser may perform the fueling communication by implementing the use cases in the order shown in FIG. 4. However, the vehicle and the dispenser may omit come of the use cases if necessary, according to a prescribed requirement.

Each of the above-described use cases may be implemented through communications between a dispenser control system of the dispenser supplying the hydrogen as fuel to the hydrogen fuel vehicle and the hydrogen fuel vehicle according to a fueling protocol for hydrogen fuel vehicle.

Meanwhile, the hydrogen fueled vehicle (hereinafter, also referred to simply as "vehicle") and the dispenser implementing the use cases may perform data exchanges for an identification of the vehicle in the use case UC-1. For this purpose, the vehicle may be equipped with sensors, an electric control unit (ECU), a transmitter, and a receiver. The receiver may be integrated with the transmitter in case of a bidirectional communication.

The dispenser may be configured to receive certain data from the vehicle. The dispenser may store the certain data in a programmable logic controller (PLC) of the fueling station to store data logging data or to use in the fueling protocol. The data logging may refer to a process of collecting data for a certain period of time to analyze a certain operating state of the hydrogen fueling system or to record data-based events/operations of the system or a network environment, or data collected by the process. In case of the bidirectional communication, the fueling station may be equipped with sensors specified by the fueling protocol, and the PLC or the electronic control unit of the fueling station may acquire measurements from the sensors and transmit the measurements to the vehicle. The vehicle or the fueling station may use a conventional communication protocol standard for the communication such as an infrared communication, WiFi, and Bluetooth.

In addition, the vehicle or the dispenser may establish a communication channel with a dispenser or a vehicle, respectively, that is physically coupled at its vehicle-dispenser interface. A pairing process for establishing such a communication channel may be performed using a wired, optical, or wireless communication technology.

The discovery and pairing procedure or the pairing process may have pre-conditions that the nozzle of the dispenser is inserted into and securely coupled to the receptacle of the vehicle fueling receptacle. The vehicle fueling receptacle may be referred to simply as a vehicle receptacle or receptacle.

In addition, the vehicle and the dispenser are typically aware of the communication protocol to follow by default. Thus, communication performed subsequently to the use case UC-1 may rely solely on the communication protocol agreed upon in a current use case as a post-condition of the discovery and pairing procedure or the pairing process. In case that a communication protocol outside an agreed scope is selected by the vehicle or the dispenser, the selected communication will not be performed. That is, even if the pairing process is completed successfully, the fueling will not be authorized.

All methods used to pair the vehicle and the dispenser may be configured so as not to increase a risk of ignition or explosion beyond an acceptable level. For example, all wired pairing methods may be configured to mitigate or prevent a spark hazard caused by an electrostatic discharge.

In terms of an effectiveness of the physical pairing, any method used to pair the vehicle and the dispenser may be integrated into the vehicle-to-dispenser interface or installed such that a proximity between the fueling receptacle of the vehicle and the nozzle and hose assembly of the dispenser is maintained. Here, the interface may refer to something physically integrated into an interface between the nozzle and receptacle. The proximity may be defined by hardware associated with the pairing method. For example, a physical geometry for the infrared communication may be specified, including an allowed distance between the transmitter and receiver. In addition, the physical geometry of the hydrogen fueling hardware may be defined in advance, in which case the proximity does not include a pairing method that may result in a risk of associating the dispenser to a vehicle that is not physically coupled to the dispenser, e.g., a long-range wireless communication technology such as Bluetooth. The infrared communication may be referred to as infrared data association (IrDA) communication and may include a bidirectional infrared (bi-IrDA) communication.

Referring back to FIG. 4, a communication method for hydrogen fueling according to an exemplary embodiment of the present disclosure, which may be performed by a communication device of the hydrogen fueled mobility, may include an operation of negotiating a communication protocol with the dispenser supplying hydrogen to the mobility (S403); an operation of negotiating a fueling protocol with the dispenser for being fueled with hydrogen from the dispenser (S404); and an operation of negotiating fueling parameters with the dispenser based on the fueling protocol (S405).

A communication method for hydrogen fueling performed by the dispenser supplying hydrogen to the hydrogen fueled mobility according to an exemplary embodiment of the present disclosure may include an operation of negotiating the communication protocol with the hydrogen fueled mobility (S403); an operation of negotiating the fueling protocol for supplying/fueling hydrogen to the hydrogen fueled mobility with the hydrogen fueled mobility (S404); and an operation of negotiating the fueling parameters with the hydrogen fueled based on the fueling protocol (S405).

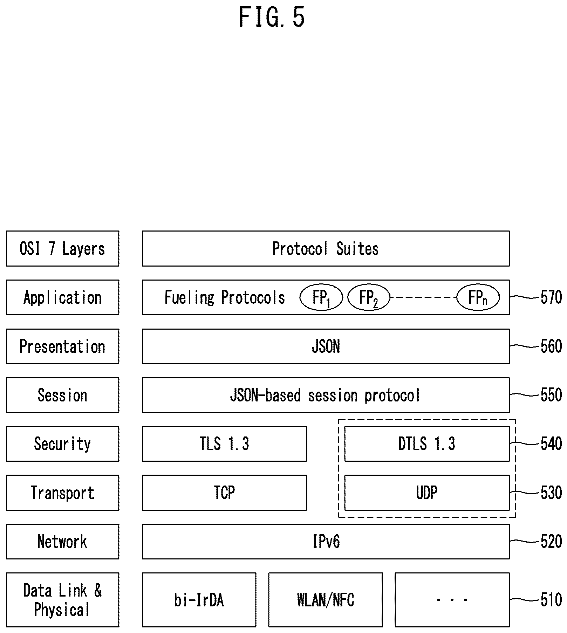

FIG. 5 illustrates an example of a communication stack related to the use cases that may be employed in the bidirectional communication process for hydrogen fueling according to an exemplary embodiment of the present disclosure, based on the open systems interconnection reference model (OSI) 7 layers.

As shown in FIG. 5, the communication stack related to the use cases of the bidirectional communication process for hydrogen fueling (hereinbelow, referred to as "hydrogen fueling communication stack") may be represented by a suite of protocols (protocol suites) corresponding to respective one of OSI 7 layers including a data link and physical layer, a network layer, a transport layer, a security layer, a session layer, a presentation layer, and an application layer.

That is, the hydrogen fueling communication stack may include at least one first protocol 510 selected from the bidirectional IrDA (bi-IrDA), WLAN, NFC, and so on as a protocol of the data link and physical layer of the OSI 7 layers.

In addition, the hydrogen fueling communication stack may include an Internet protocol version 6 (IPv6) protocol 520 as a protocol of the network layer of the OSI 7 layers.

In addition, the hydrogen fueling communication stack may include at least one third protocol 530 selected from transmission control protocol (TCP), user datagram protocol (UDP), and so on as a protocol of the transport layer of the OSI 7 layers.

In addition, the hydrogen fueling communication stack may include at least one fourth protocol 540 selected from transport layer security (TLS), datagram transmission layer security (DTLS), and so on as a protocol of the security layer of the OSI 7 layers. The TLS may include versions such as TLS 1.2, and TLS 1.3, and the DTLS may include versions such as DTLS 1.2 and DTLS 1.3. The TLS may be implemented over TCP sockets, and DTLS may be implemented over UDP sockets.

In addition, the hydrogen fueling communication stack may include a JSON-based session protocol 550 as a protocol of the session layer of the OSI 7 layers. The JSON-based session protocol 550 may be used for the communications between the vehicle and the dispenser or in the data transmission between the electronic control unit of the vehicle and the electronic control unit of the fueling station.

In addition, the hydrogen fueling communication stack may include a Javascript object notation (JSON) 560 as a protocol of the presentation layer of the OSI 7 layers. The JSON is one of formats that may be used when sending data from a server to a client. Using the JSON, protocol messages between the vehicle and the dispenser or between the electronic control unit of the vehicle and the electronic control unit of the fueling station may be represented in JSON format.

In addition, the hydrogen fueling communication stack may include hydrogen fueling-related fueling protocols FP 570 as a protocol of the application layer of the OSI 7 layers. The fueling protocols 570 may include a first fueling protocol FP1, a second fueling protocol FP2, and an n-th fueling protocol FPn, where 'n' may be a natural number greater than or equal to 3.

In an alternative embodiment, the hydrogen fueling communication stack may include a power line communications (PLC) or WLAN as a protocol of the data link and physical layers and the network layer; TCP and/or IPv6 protocol as protocols of the transport layer and the security layer; binary extensible markup language (XML) protocol as a protocol of the session layer; and one of the existing protocols used in the electric vehicles as protocols of the presentation layer and the application layer. The existing protocols used in the electric vehicles may include at least one protocol for direct current (DC) charging, alternate current (AC) charging, wireless power transfer (WPT), or automatic connection device pantograph (ACDP) charging of the electric vehicles.

Communication data items that may be exchanged between the vehicle and the fueling station through the hydrogen fueling communication stack may be summarized as shown in Table 1.

**[Table 1]**

| Item | From Dispenser to Vehicle | From Vehicle to Dispenser |
|---|---|---|
| Communication Data Item | - Fuel delivery pressure | - Receptacle type |
| | - Fuel delivery temperature | - Receptacle Working pressure |
| | - Delivery flow rate | - Tank volume |
| | - Maximum fuel delivery pressure | - Measured pressure |
| | - Minimum fuel delivery temperature | - Measured temperature |
| | - Maximum fuel delivery temperature | - Maximum working pressure |
| | - Maximum delivery flow rate | - Maximum working temperature |
| | - Ambient temperature | |
| | - Fueling communication status (Y/N) | |
| | - Target SOC (value) | |
| | - Fueling in-progress status (Y/N) | |
| | - Emergency stop status (Y/N) | |
| | - Fueling protocol category | |
| | - Amount of supplied hydrogen | |
| | - Target fueling duration (expected) | |

Meanwhile, the discovery and pairing procedure use case UC1 enables a device to identify a communication counterpart (i.e., the communication module of the vehicle or the dispenser) responsible for controlling a receptacle or nozzle physically coupled to the device. In addition, the use case UC1 may also define an incompatibility identifying method and a safety device mechanism. In this use case UC1, the vehicle and the dispenser may attempt to find a common communication technology to execute the fueling protocol. The vehicle and the dispenser may discover each other based on a discovery mechanism provided by the data link and physical layers and initiate the communication. An additional pairing procedure may be required to establish a communication channel with the device connected to the fueling hose assembly. A separate pairing channel may be required to send the pairing information in case where a correct pairing is not ensured by the communication channel, for example, in case of the wireless communication. However, if the pairing is implicitly ensured, a communication channel integrated with the hose assembly, for example, may be sufficient.

Table 2 shows objectives, pre-conditions, and post-conditions of the use case UC1 of the discovery and pairing operation (S401) shown in FIG. 4.

**[Table 2]**

| Type | Description |
|---|---|
| Use case name | UC-1: "Discovery and Pairing" |
| Objectives | UC-1 allows devices to identify the communication counterparty (communication module of vehicle or dispenser) that is responsible for the control of the physically connected receptacle or nozzle, respectively. UC-1 also defines how to identify incompatibility and may define a failsafe mechanism. |
| Short Description | During this use case, vehicle and dispenser try to find out any common communication technologies to run a fuelling protocol. Depending on the discovery mechanism provided by the underlying physical/data-link layer, the vehicle and dispenser discovers each other and start communication. To ensure that the communication channel is established with the devices that are bound to the fuelling hose assembly, extra pairing procedure may need to be involved. When communication channel does not guarantee the correct |
| | pairing (e.g., wireless communication), we may need an extra pairing channel that delivers pairing information. When pairing is implicitly guaranteed (e.g., communication integrated with hose assembly), only communication channel should be sufficient. |
| Pre-conditions | The dispenser nozzle is securely connected to the vehicle receptacle. |
| Post-conditions | Vehicle and Dispenser knows what communication medium to use for the communication. After this use case, subsequent communication solely depends on the communication protocol that was agreed on in this use case. |
| | If an out-of-scope communication protocol is chosen, no further ISO 19985 communication is performed. |

Table 3 shows supported communication technologies and relevant clauses which may be used in the use case UC1 of the discovery and pairing operation (S401) shown in FIG. 4.

**[Table 3]**

| Clause | Communication Technology | Communication Channel | Pairing Channel |
|---|---|---|---|
| Annex P.2 | Bidirectional IrDA | (irDA references) | N/A |
| Annex P.3 | WLAN with NFC | IEEE 802.11 | NFC Forum Specifications |

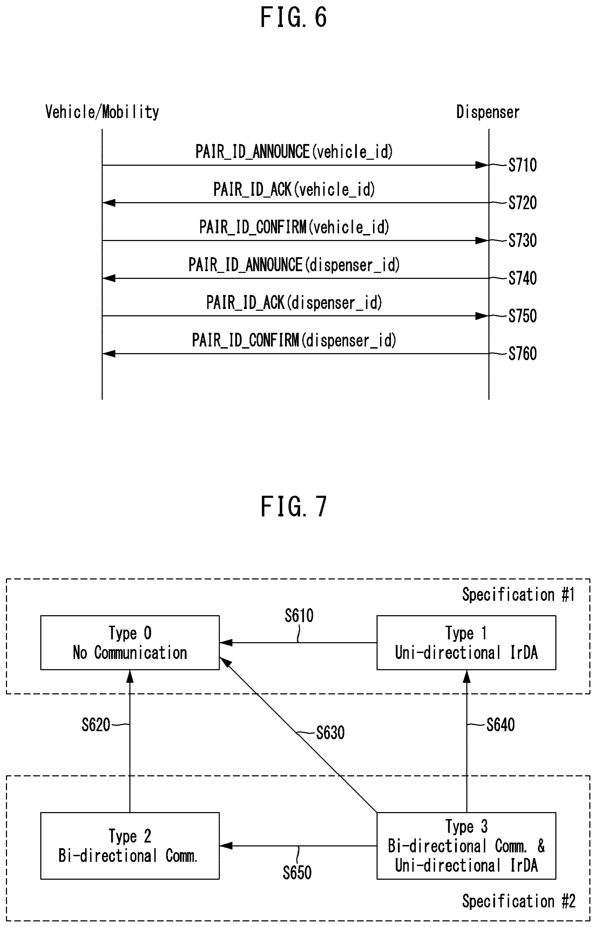

FIG. 6 is a sequence diagram illustrating the operation S401 according to an exemplary embodiment of the present disclosure in detail. Referring to FIG. 6, in the pairing process of the discovery and pairing operation (S401) shown in FIG. 4, the vehicle and the dispenser may exchange pairing IDs with each other and discover the pairing ID of the counterpart during the pairing at UCDC level 2 and UCDC level 3.

For example, the vehicle may broadcast a message PAIR_ID_ANNOUNCE containing its pairing ID (PAIR_ID), i.e., a vehicle ID (in operation S710). The dispenser may send a message PAIR_ID_ACK to the vehicle to acknowledge a receipt of the vehicle ID from the vehicle (in operation S720). The vehicle may send a message PAIR_ID_CONFIRM to the dispenser to confirm a receipt of the ACK message from the vehicle (in operation S730).

Next, the dispenser may broadcast a message PAIR_ID_ANNOUNCE containing its pairing ID, i.e., a dispenser ID (in operation S740). The vehicle may send a message PAIR_ID_ACK to the dispenser to acknowledge a receipt of the dispenser ID from the dispenser (in operation S750). The dispenser may send a message PAIR_ID_CONFIRM to the vehicle to confirm a receipt of the ACK message from the dispenser (in operation S760).

Such a transmission-echo-verification method enables the vehicle and the dispenser to use session-specific randomized pairing IDs. This approach helps to solve a privacy issue related with the exchange of the pairing IDs. That is, trust in the pairing process may be established by a subsequent process, and for this purpose, the session-specific pairing IDs may be included in the data used to establish the trust.

Meanwhile, when supporting secure communications at a particular UCDC level, at least one of the vehicle and the dispenser may verify that the pairing provides sufficient information to secure the communication channel for all methods used to pair the vehicle and the dispenser. For example, the pairing may include an exchange of cryptographic keys so that the vehicle and the dispenser may secure communication during the fueling.

It is noted that, since the UCDC Level 1 does not support the bidirectional communication, the communication channel security may not be secured at the UCDC Level 1. Pairing the vehicle and the dispenser at the UCDC Level 2 and the UCDC Level 3 may be configured to provide sufficient information to secure the communication enough to satisfy a particular security level, e.g., IEC 62443 Security Level 3. The IEC 62443 Security Level 3 may be a security level for actors with adequate resources and adequate motivation.

FIG. 7 illustrates examples of a backward compatibility that may be employed in the bidirectional communication process for hydrogen fueling according to an exemplary embodiment of the present disclosure.

Referring to FIG. 7, the hydrogen fueling device may be designed to have the backward compatibility with existing devices in consideration of interoperability. The hydrogen fueling device or a communication device in the hydrogen fueling device may be classified into Type 0, Type 1, Type 2, and Type 3 based on the interoperability.

A Type 0 device may refer to a device that does not support the fueling communication or cannot receive a relevant communication message.

A Type 1 device may refer to a device that supports the IrDA communication for the fueling. The Type 1 device may fall back to a Type 0 device.

A Type 2 device may refer to a device that supports an advanced communication (AC). The Type 2 device may fall back to a Type 0 device.

A Type 3 device may refer to a device that supports the IrDA communication and the advanced communication. The Type 3 device may fall back to any of Type 0, Type 1, and Type 2 devices.

The advanced communication may refer to a communication using a certain protocol and a medium such as wireless local area network (WLAN), Bluetooth (BT), near field communication (NFC), WiFi, ultra-wideband (UWB), radio frequency identification (RFID), 4G, and 5G. In addition, the advanced communication may include bidirectional IrDA, serial communication, vehicle Ethernet (ETH), high level communication, and so on. The certain protocol may include transmission control protocol/internet protocol (TCT/IP), fueling protocol, and so on. The high level communication may process all information exceeding what is handled by command and control communications. The data link of the high level communication may use a power line communication (PLC), but the present disclosure is not limited thereto.

The advanced communication may include a hybrid form such as a combination of the IrDA communication and the wired communication and a combination of the IrDA communication and the wireless communication. The combination of the IrDA communication and the wired communication may require a modification in the nozzle and the receptacle.

That is, the advanced communication may be a wired or wireless bidirectional communication scheme, and wireless communication scheme may include various communication schemes such as 5G, WLAN, BLE, ETH, UWB, RFID, and NFC. A known protocol such as TCP/IP may be used as the communication protocol for the communication scheme. For example, the wireless communication scheme that may be considered may include Bluetooth, WLAN, WiFi (ISO 15118 for inductive / ACD), UWB (IEC limited consideration for ACD), or NFC.

In practice, the hydrogen fueling device may be implemented to support different communication schemes. Accordingly, the bidirectional communication process for hydrogen fueling according to the present embodiment may be configured to maximize the interoperability between the devices.

In other words, as shown in FIG. 7, when a Type 1 device supporting a specification #1 according to a certain standard meets a Type 0 device or a Type 2 device, the Type 1 device may fall back to the Type 0 (S610).

Also, when a Type 2 device supporting a specification #2 according to a certain standard meets a Type 0 device or a Type 1 device, the Type 2 device may fall back to the Type 0 (S620).

In addition, when a Type 3 device supporting the specification #2 meets a Type 0 device, the Type 3 device may fall back to the Type 0 (S630). When a Type 3 device meets a Type 1 device, the Type 3 device may fall back to the Type 1 (S640). When a Type 3 device meets a Type 2 device, the Type 3 device may fall back to the Type 2 (S650).

The aforementioned specification #1 may include a specification according to a Society of Automotive Engineers (SAE) standard. The specification #2 may include a specification according to ISO 19885-3 standard.

To support the interoperability described above, the hydrogen fueling device may perform a connection compatibility check. For example, the connection compatibility check may be performed according to Scenario 1 to Scenario 3 as follows depending on whether the WLAN which is one of the advanced communication schemes is supported by each of the devices.

In Scenario 1, the dispenser may be prepared with an access point (AP), i.e., a wireless router. The access point may beacon a signal so that the vehicle may access the fueling station and a vehicle supply equipment (VSE). An FCEV approaching the dispenser may scan and discover the dispenser, and may establish a WLAN link with the dispenser.

In Scenario 2, the dispenser does not support the bidirectional WLAN but supports a unidirectional IrDA. The dispenser corresponds to the Type 1 device. An FCEV approaching the dispenser, which is a Type 3 device, cannot scan and discover the dispenser which is a Type 1 device. When the nozzle attached to a cable of the dispenser is coupled to the receptacle of the FCEV, the IrDA communication may be initiated between the FCEV and the dispenser.

In Scenario 3, the dispenser may support the bidirectional WLAN communication and the unidirectional IrDA communication. In this case, the dispenser corresponds to the Type 3 device. The FCEV, which is a Type 1 device, may be parked near the dispenser. The dispenser cannot find any WLAN client yet. When the nozzle attached to a cable of the dispenser is coupled to the receptacle of the FCEV, the IrDA communication may be initiated between the FCEV and the dispenser.

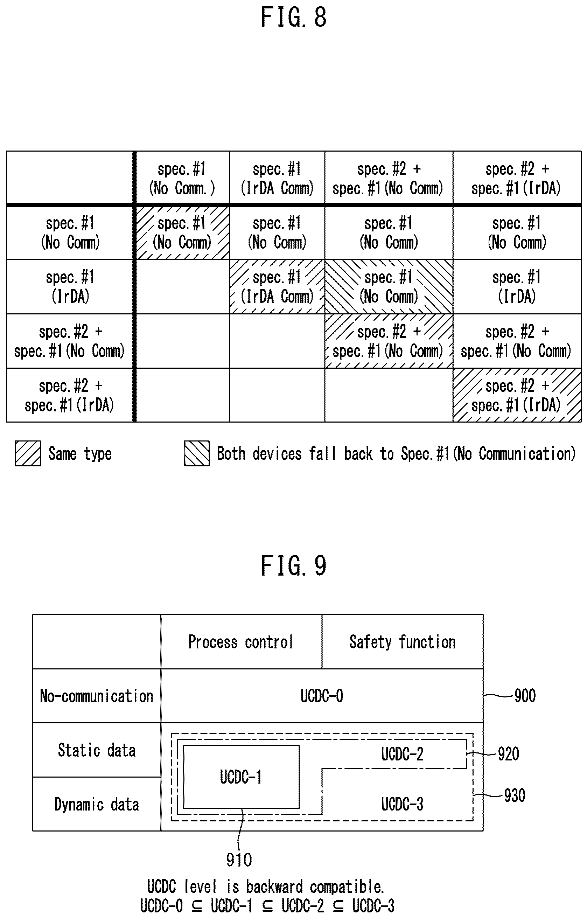

FIG. 8 is a table summarizing examples of backward compatibilities applicable in the bidirectional communication process for hydrogen fueling according to an exemplary embodiment of the present disclosure.

Referring to FIG. 8, the bidirectional communication process for hydrogen fueling according to the present embodiment may provide rules and principles of falling back in selecting the fueling method and the communication protocol to maximize the interoperability instead of selecting the communication schemes most preferred by the FCEV or the dispenser.

That is, when either the vehicle or the dispenser meets the other, the device with a relatively higher type or UCDC level may be configured to fall back to the type or level of a device with a relatively lower type or UCDC level.

For example, if the vehicle and the dispenser are of the same type or the same UCDC level, both devices may maintain their current type or UCDC level. On the other hand, if one device is a Type 1 device and the other device is a Type 2 device, both devices may be configured to fall back to Type 0. Meanwhile, if one device is a Type 3 device and the other device is not a Type 3 device, the Type 3 device may be configured to fall back to the type or UCDC level the same as those of the other device.

The aforementioned specification #1 may be a communication protocol according to the SAE standard, and the specification #2 may be a communication protocol according to the ISO 19885 standard.

Under the configuration described above, if the mobility and the dispenser have common or the same implementations of the type as each other, the mobility and the dispenser may select a type supported by both devices and which is the best one of the types. When a device having no communication capability (hereinbelow, referred to as "no-communication device" or "no-comm device") meets a device supporting the unidirectional communication (hereinbelow, referred to simply as "unidirectional communication device"), the latter may fall back to the no-communication device that does not support any communication scheme. When two devices supporting the bidirectional communication meets each other, the two devices may maintain the bidirectional communication scheme as it is. Here, the compatibility of the UCDC level may be handled separately. When a device meets a no-communication device, the device has to rely on the no-communication. Such rules may be applied to all devices supporting the bidirectional communication (hereinbelow, referred to simply as "bidirectional communication device").

In addition, when a unidirectional communication device meets a bidirectional communication device, the bidirectional communication device may fall back to the unidirectional communication scheme if the bidirectional communication device supports both the unidirectional communication scheme and the bidirectional communication scheme. When the bidirectional communication device does not support the unidirectional communication, the bidirectional communication device may fall back to the no-communication device to rely on the no-communication scheme.

The bidirectional communication device described above may be configured to support the fueling method based on the unidirectional communication regardless of whether the unidirectional communication capability is equipped or not. The bidirectional communication device needs to be able to check whether the counterpart device supports the bidirectional communication or not. If the counterpart FECV (or MOBILITY) and/or the dispenser does not support the bidirectional communication, the bidirectional communication device may fall back to the unidirectional communication device relying on the unidirectional communication scheme that may be compatible between the devices.

FIG. 9 illustrates use classifications of communication data (UCDC) applicable in the bidirectional communication process for hydrogen fueling according to an exemplary embodiment of the present disclosure and backward compatibilities in the use classifications of communication data.

As shown in FIG. 9, the mobility and the dispenser may have respective pairing identities (IDs), and requirements for exchanging the IDs may be classified by the use classification of communication data (UCDC) level. The UCDC level may have UCDC level 1 (UCDC-1) 910, UCDC level 2 (UCDC-2) 920, and UCDC level 3 (UCDC-3) 930. The UCDC level may further include UCDC level 0 (UCDC-0) 900.

In case of the UCDC Level 0 (UCDC-0) 900, data is not communicated. Even if data is communicated, communicated data is not used for the fueling protocol for dispensing of hydrogen or in association with safety function. In the UCDC Level 0 (900), since no communication is performed between the mobility and the dispenser, the dispenser cannot send the pairing ID to the mobility during a process of process control or safety function.

When the pairing is attempted at the UCDC Level 1 (UCDC-1) 910, the mobility may send the pairing ID to the dispenser. Although the data delivered at the UCDC Level 1 (UCDC-1) 910 is not used for the safety function, static data communicated may be used to improve the performance of the fueling protocol, and dynamic data communicated may be used to reduce a risk against process deviations during the fueling protocol.

The static data communicated at UCDC level 2 (UCDC-2) 920 can be used for the safety function. The static data of the UCDC level 2 (UCDC-2) 920 may be data added to the static data and the dynamic data defined for the UCDC level 1 for a permitted use.

The static data and dynamic data at the UCDC level 3 (UCDC-3) 930 may be used for a dynamic control of the protocol or for the safety function. The dynamic data of the UCDC level 3 (UCDC-3) 930 may be data added to the static data and the dynamic data defined for the UCDC level 2 for a permitted use.

As described above, the UCDC levels may have a structure in which the UCDC level 1 is included in the UCDC level 2 and the UCDC level 2 is included in the UCDC level 3, i.e., a higher level includes a lower level. A device supporting a certain UCDC level can support a device of a lower UCDC level. Devices capable of supporting different UCDC levels may use a highest UCDC level supported by both devices. The aforementioned UCDC levels can also easily support the UCDC level 0. It can be seen that the UCDC levels are backward compatible. In another embodiment of the present disclosure, the backward compatibility may be effectively applicable to each of the no-communication scheme (Non-Comm), the unidirectional communication scheme (Uni-directional Comm), the bidirectional communication scheme (Bidirectional Comm), or their combinations regardless of the UCDC level.

Referring to FIGS. 4 to 8 together, information on interoperability and/or compatibility between the mobility/mobility and the dispenser may be shared in the discovery and pairing operation (S401) shown in FIG. 4. The information on the interoperability and/or the compatibility may be utilized in the communication protocol negotiation operation (S403), the fueling protocol negotiation operation (S404), and/or the fueling parameter negotiation operation (S405) which will be described below.

In another exemplary embodiment of the present disclosure, the information on the interoperability and/or the compatibility shared between the mobility/mobility and the dispenser in the discovery and pairing operation (S401) shown in FIG. 4 may be updated or -shared again in the communication protocol negotiation operation (S403), the fueling protocol negotiation operation (S404), and/or the fueling parameter negotiation operation (S405). The information on the interoperability and/or the compatibility may be updated due to a change in the communication environment, a change in the parameters affecting the fueling process, and so on.

In another exemplary embodiment of the present disclosure, at least a part of the discovery and pairing operation (S401) shown in FIG. 4 may be referred to as a dispenser discovery protocol (DDP).

The DDP may be initiated by a DDP request message DDPRequest broadcast by the hydrogen fueled mobility. The DDPRequest may include a pairing ID "pairing_id" of the hydrogen fueled mobility.

The dispenser may receive the DDP request message DDPRequest, and may transmit a DDP response message DDPResponse in response to the DDPRequest. The DDP response message DDPResponse may include an IP address "IPAddr" of the dispenser, a TCP port number "TCPPort" of the dispenser, a UDP port number "UDPPort" of the dispenser, and a pairing ID "pairing_id" of the dispenser.

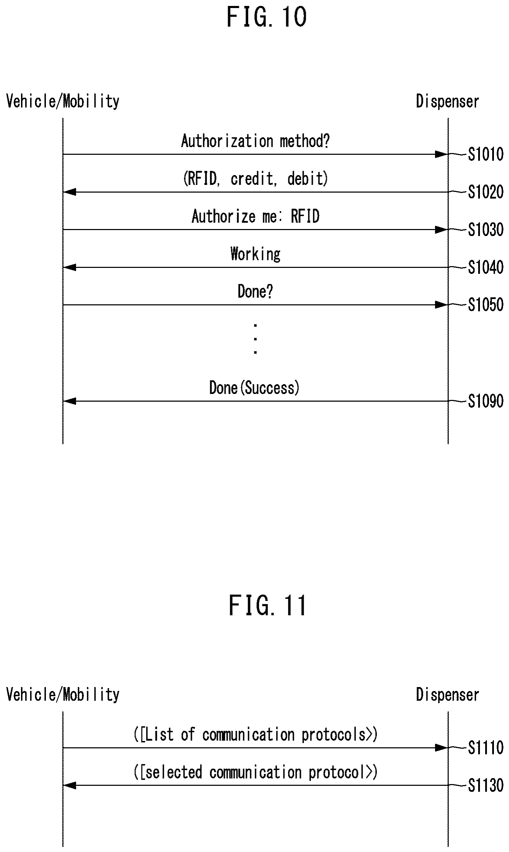

FIG. 10 is a sequence diagram illustrating an authorization process during a communication security procedure (S402) that may be employed in the bidirectional communication process for hydrogen fueling according to an exemplary embodiment of the present disclosure.

Referring to FIG. 10, the hydrogen fueled mobility may request a list of authorization methods to the dispenser (S1010). The dispenser may send a response message to the request for the list of authorization methods to the hydrogen fueled mobility (S1020). The response message may include a list of authorization methods related to a self-authorization or an external authorization such as the RFID, credit cards, or debit cards.

Next, the hydrogen fueled mobility may send an authorization request message including an authorization method selected from the list of authorization methods such as the RFID to the dispenser (S1030). The dispenser may send a response message to the authorization request of the hydrogen fueled mobility to the hydrogen fueled mobility (S 1040). The response message may include information indicating that the authorization for the authorization method selected by the hydrogen fueled mobility is working.

Then, the hydrogen fueled mobility may wait for a response containing an authorization result from the dispenser, and may send an authorization result request message (Done?) for the selected authorization method to the dispenser (S1050). If the authorization result is not received or the authorization is not completed, the operations S1010-S1050 may be repeatedly carried out. After the authorization is completed, the dispenser may send an authorization completion message ("Done (Success)") to the hydrogen fueled mobility (S1090).

According to the process described above, the dispenser may verify whether the hydrogen fueled mobility is authorized, i.e., whether the user of the hydrogen fueled mobility has a right for the hydrogen fueling, before proceeding with the hydrogen fueling process.

To ensure the security of the authorization process, the hydrogen fueling device including at least one of the hydrogen fueled mobility and the dispenser may establish a transport layer, i.e., a TCP connection, after the data link and physical layer connections are established between the hydrogen fueled mobility and the dispenser, and then perform a TLS handshake to authenticate and exchange keys, thereby establishing a secure communication channel. During the exchange of critical information for security, user datagram protocol (UDP) communication protected by datagram transport layer security (DTLS) may be used.

In addition, the hydrogen fueled mobility and the dispenser may perform the discovery and pairing procedure and establish a connection in the data link and physical layers. Then, credentials required for authentication and key exchange may be prepared. As a result, the communication channel between the hydrogen fueled mobility and the dispenser may be encrypted and integrity-protected. The dispenser may authenticate the hydrogen fueled mobility, and optionally, the hydrogen fueled mobility may authenticate the dispenser.

Meanwhile, during the TLS handshake, the authentication of the hydrogen fueled mobility may be mandatory while the authentication of the dispenser may be optional. In this case, the dispenser may act as a client and the hydrogen fueled mobility may act as a server.

For the TLS handshake, the hydrogen fueled mobility and the dispenser have to prepare necessary credentials. The hydrogen fueled mobility and the dispenser may store and maintain a certificate chain, a private key corresponding to its certificate, and a certificate of a trust anchor in a secure storage for protecting against an unauthorized access.

During the TLS handshake, the hydrogen fueled mobility may send the dispenser a predefined certificate request message to request a client authentication from the dispenser. After receiving the certificate request message, the dispenser may transmit a certificate and a certificate verification message to the hydrogen fueled mobility to provide the certificate to the hydrogen fueled mobility.

If the hydrogen fueled mobility sends the certificate request message along with a handshake message such as ServerHello but the dispenser does not send a certificate verification message along with the certificate, the hydrogen fueled mobility may terminate the TLS handshake by sending an alert message with a "Certificate_required" alert code.

According to another exemplary embodiment of the present disclosure, objectives, pre-conditions, and post-conditions of the operation S401 shown in FIG. 4 may be summarized as shown in Table 4.

**[Table 4]**

| Type | Description |
|---|---|
| Use case name | UC-2: "Communication Security" |
| Objectives | \Vehicle and Dispenser establish a secure channel over the discovered communication channel to achieve communication security goals including confidentiality, integrity, and privacy. |
| Short Description | After the physical and data-link layer connection is made between vehicle and dispenser, they setup layer-3 and establish a TCP connection, then perform a TLS handshake to authenticate and exchange keys to establish a secure communication channel. |
| Pre-conditions | Vehicle and dispenser performed discovery and pairing use case successfully and made a data-link layer connection. Credentials necessary for the authentication and key exchange are prepared. |
| Post-conditions | Dispenser authenticated the vehicle and the vehicle authenticated dispenser successfully. Communication channel between vehicle and dispenser are encrypted and integrity protected. |

FIG. 11 is a sequence diagram illustrating a communication protocol negotiation operation S403 that may be employed in the hydrogen fueling bidirectional communication process according to an exemplary embodiment of the present disclosure. Referring to FIG. 11, the communication protocol negotiation operation S403 may include an operation of transmitting, to the dispenser, a message including information on a first communication protocol applicable in the mobility (S1110); and an operation of receiving, from the dispenser, a message including information on a second communication protocol selected from common communication protocols applicable in both the mobility and the dispenser (S1130).

In the exemplary embodiment shown in FIG. 11, the dispenser may receive a message, from the mobility, including information on the first communication protocol applicable in the mobility (S1110), compare the first communication protocol with the communication protocol applicable in the dispenser to select a second communication protocol among the common communication protocols applicable in both the mobility and the dispenser, and transmit, to the mobility, a message including information on a selected second communication protocol (S1130).

Although not shown in FIG. 11, the communication protocol negotiation operation may further include an operation in which the dispenser requests, from the mobility, information including a list of first communication protocols applicable in the mobility before the operation S1110.

In alternative exemplary embodiment of the present disclosure, the dispenser may transmit first a message including information on communication protocols applicable in itself to the mobility, and the mobility may select a certain communication protocol among the common communication protocols and transmit a message including information on a selected communication protocol to the dispenser.

In such a case, the communication protocol negotiation operation may further include an operation in which the mobility requests the dispenser for information including the list of applicable communication protocols.

Table 5 shows objectives, pre-conditions, and post-conditions of the operation S403 according to an exemplary embodiment of the present disclosure.

**[Table 5]**

| Type | Description |
|---|---|
| Use case name | UC-3: "Communication Protocol Negotiation" |
| Objectives | Vehicle and Dispenser determine which communication protocol to use throughout the fueling. |
| Short Description | Once TLS handshake is successfully finished, the vehicle and the dispenser negotiates on the communication protocol to use throughout the fuelling session. The negotiation starts when the vehicle sends a list of its supported protocols and then the dispenser picks a common protocol supported by both and the vehicle prefers the most. |
| Pre-conditions | A secure authenticated communication channel is established using TLS 1.3. |
| Post-conditions | The vehicle and the dispenser reached an agreement on which communication protocol to use for their fuelling communication. |

Table 6 shows contents of the message transmitted or received in the operation S 1110 according to an exemplary embodiment of the present disclosure.

**[Table 6]**

| Element Name | Type | Semantics |
|---|---|---|
| protocols | CommProtocolType | Communication protocols supported by the mobility |

| CommProtocolType | | |
|---|---|---|
| Index | Unsigned integer | Index of the protocol |
| Name | String | Name of the protocol |
| Ver | String | Version of the protocol |
| pref | Unsigned integer | Preference of protocols. Smaller number represents higher preference. |

The information on the first communication protocol may include at least one of an index of the first communication protocol, a name of the first communication protocol, a version of the first communication protocol, and/or a preference for the first communication protocol. According to an exemplary embodiment of the present disclosure, contents of the message transmitted or received in the operation S1130 may be summarized as shown in Table 7.

**[Table 7]**

| Element Name | Type | Semantics |
|---|---|---|
| Index | Unsigned integer | Optional: Index of chosen protocol |
| Result | resultType | Result of the protocol negotiation. 'OK' if successful. |
| | | 'FAILED_INCOMPAT' otherwise. |

The response message including the information on the second communication protocol may further include information on whether negotiating the communication protocol was successful. The communication protocol negotiation procedure is performed to identify a communication protocol to be followed during a hydrogen fueling session after the mobility and the dispenser discover each other and perform pairing over a compatible communication channel. In particular, in the present embodiment, the dispenser may take the initiative in exchanging the communication protocol and parameters with the mobility.

That is, the communication method according to an exemplary embodiment of the present disclosure may carry out the operation S401 of performing the discovery and pairing process with the dispenser using a first communication technology.

In case that a result of the communication protocol negotiation operation S403 is related to a second communication technology, the operation S404 of negotiating the fueling protocol and the operation S405 of negotiating the fueling parameters, which will be described in detail below, may be performed using the second communication technology.

In the operation S401 of performing the discovery and pairing process, information on interoperability and/or compatibility between the mobility and the dispenser may be shared.

In the process of performing the operations S403-S405, the information on the interoperability and/or compatibility between the mobility and the dispenser shared in the operation S401 of performing the discovery and pairing process may be updated taking into account changes in the communication environment and environmental variables related to the hydrogen fueling.

The communication protocol negotiation procedure may be implemented for all available communication protocols to ensure a successful negotiation among different fueling protocols for each communication technology. For example, a fueling protocol using a communication technology such as WLAN may use a protocol commonly supported by the mobility and the dispenser (hereinbelow, referred to as "common protocol") to determine a communication protocol to be used in the bidirectional communication process for hydrogen fueling.

In an actual implementation, there may exist various combinations between the mobility and the dispenser according to the hydrogen fueling communication standards, communication modes, fueling methods, communication levels, and other parameters. Here, the hydrogen fueling communication standards may include SAE J2601 series, ISO 19885-3, and ISO 19885-4 standards. The communication modes may include the no-communication, the IrDA, XYZ (ISO), and so on. The fueling methods may include a table-based fueling method such as a lookup table-based method, and an MC formula-based fueling method. The communication levels may include UCDC levels, and other parameters may include a pressure class, a category of a compressed hydrogen storage system (CHSS), hydrogen fueling tables, and so on.

Meanwhile, the mobility or the dispenser may be configured to perform falling back to a lower type or lower UCDC level according to the type and UCDC level of the counterpart device discovered during the communication protocol negotiation procedure.

In a variety of possible combinations of environments, if an incompatibility is identified in the parameters exchanged during the negotiation procedures for hydrogen fueling(e.g., in the use cases UC3-UC5), the mobility and the dispenser may revert to the communication protocol negotiation procedure to perform the negotiation procedure again.

Examples of the communication protocols to which the priorities are assigned according to an exemplary embodiment of the present disclosure are shown in Table 8.

The dispenser may send a response message to the mobility, including a certain protocol, i.e., a selected protocol, selected from the list of protocols (S1130). The selected protocol selected by the dispenser may be a common protocol supported by both the dispenser and the mobility and having a highest priority and most preferred by the mobility, e.g., ISO 19885-3-2023-UCDC-3 protocol in the example of Table 8.

The common protocol may be a result of an agreement between the mobility and the dispenser on the communication protocol to be used for the fueling communication.

Meanwhile, the mobility may prioritize the communication protocols which the mobility supports. The mobility may include a FCEV. The mobility may provide the prioritized communication protocols to the dispenser. Examples of priorities are assigned to the communication protocols are shown in Table 8.

**[Table 8]**

| Protocol ID | Priority |
|---|---|
| SAE J2601 - No comm. | 7 |
| SAE J2799 - IrDA | 6 |
| SAE J2601 - IrDA | 5 |
| ISO 19885-3-2023-UCDC-0 | 4 |
| ISO 19885-3-2023-UCDC-1 | 3 |
| ISO 19885-3-2023-UCDC-2 | 2 |
| ISO 19885-3-2023-UCDC-3 | 1 |

After the communication protocol is selected in the communication protocol negotiation use case UC3, the mobility and the dispenser may activate their communication protocol implementations and initiate the fueling protocol negotiation. The fueling protocol negotiation is a procedure in which the mobility and the dispenser find and agree on a fueling protocol to be used for the fueling session. In this operation, the mobility and the dispenser may select the communication protocol that the mobility most prefers among the protocols supported by both the mobility and the dispenser. A communication protocol negotiation method for the hydrogen fueling according to an exemplary embodiment of the present disclosure, which is performed by a communication controller of the hydrogen fueled mobility 100, may include: an operation S1110 of transmitting, to a communication entity related to the dispenser 200, a first message including a list of one or more first fueling protocols supported by the mobility and one or more first communication protocols required to execute the one or more first fueling protocols; and an operation S1130 of receiving, from the communication entity related to the dispenser 200, a response message including a second fueling protocol selected from the one or more first fueling protocols. The communication entity related to the dispenser 200 may be the electronic controller 210 of the dispenser 200 or may be a separate communication device mounted on the dispenser 200. Alternatively, an electronic controller or a separate communication device in the fueling station system 220 may communicate with the mobility/mobility 100 in place of the dispenser 200.

The first message may include priority information based on a preference of the mobility 100 as shown in Table 8. In addition, each message may be defined according to Table 4 through Table 6.

The response message may include the second fueling protocol selected from the one or more first fueling protocols based on the priority information based on the preference. The mobility 100 side or the dispenser 200 side, alone or in cooperation with each other, may select the second fueling protocol based on priority information based on preference. An operation of finally sending an approval message to the other party to complete the protocol negotiation process may be performed by the mobility 100 side, but may also be performed by the dispenser 200 side, alternatively. In this case, the dispenser 200 may first send a list of supported protocols, and the mobility 100 may feedback the selected protocol.

The response message may include one or more first fueling protocols as well as the second fueling protocol selected from protocols commonly included in the one or more first fueling protocols and protocols supported by the dispenser 200.

The response message may include the second communication protocol determined, by the controller of the dispenser 200, from a plurality of first communication protocols required to execute the first fueling protocol according to a fallback device type based on the interoperability between the mobility 100 and the dispenser 200 and the backward compatibility.

According to an exemplary embodiment of the present disclosure, in case that there exists no common communication protocol, the no-communication scheme may be selected as shown in FIGS. 7-9, and a hydrogen fueling protocol according to the no-communication scheme may be selected according to a predetermined rule so that hydrogen may be supplied according to the selected hydrogen fueling protocol. In this case, operations S404-S405 which will be described below may be simplified or omitted.

According to another exemplary embodiment of the present disclosure, if there exists no common communication protocol, the communication between the mobility 100 and the dispenser 200 may be terminated (S409).

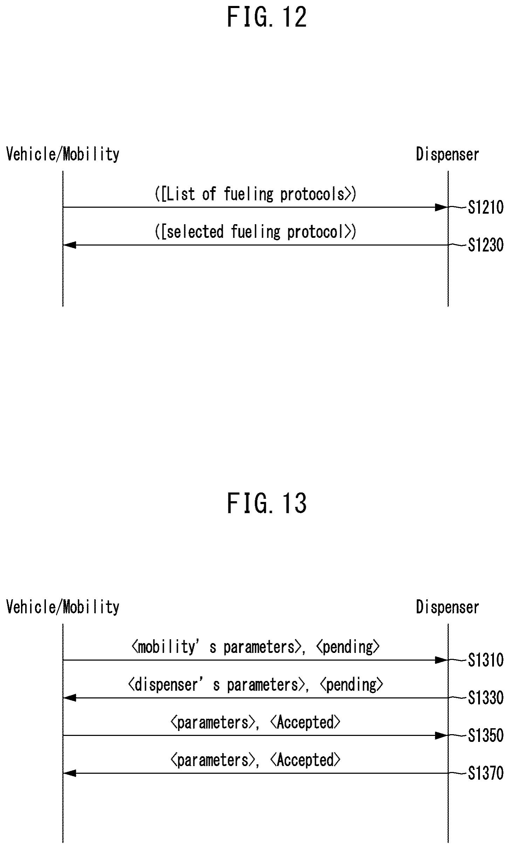

FIG. 12 is a sequence diagram illustrating a communication protocol negotiation operation S404 during the hydrogen fueling bidirectional communication process according to an exemplary embodiment of the present disclosure.

Referring to FIG. 12, the operation S404 of negotiating the fueling protocol according to an exemplary embodiment of the present disclosure may include an operation S1210 of transmitting a message including information on available first fueling protocols applicable in the mobility to the dispenser based on a result of the communication protocol negotiation (S403); and an operation S1230 of receiving a message including information on the second fueling protocol selected from fueling protocols commonly applicable in both the mobility and the dispenser from the dispenser.

After the second communication protocol is selected as a result of the communication protocol negotiation (S403), a message including information on one or more available first fueling protocols supporting the selected second communication and applicable in the mobility may be transmitted to the dispenser (S1210).

The dispenser may select fueling protocols which belongs commonly to the fueling protocols supporting the second communication protocol and applicable in the dispenser and the one or more available first fueling protocols, and determine one of selected common protocols as the second fueling protocol. At this time, the second fueling protocol may be determined based on the interoperability and/or the compatibility. Also, the second fueling protocol may be determined based on the preference set by the mobility or the dispenser.

In the exemplary embodiment shown in FIG. 12, the dispenser may receive the message including the information on the one or more available first fueling protocols applicable in the mobility from the mobility (S1210), compare the first fueling protocols with fueling protocols applicable in the dispenser, select the second fueling protocol from the common fueling protocols applicable in both the mobility and the dispenser, and transmit a message including the information on the selected second fueling protocol to the mobility (S1130).

Although not shown in FIG. 12, an operation may further be included before the operation S1210 in which the dispenser requests the mobility for information including a list of the first fueling protocols applicable in the mobility.

In another exemplary embodiment of the present disclosure, the dispenser may first transmit a message including information on fueling protocols applicable in the dispenser to the mobility, and the mobility may select a particular fueling protocol among common fueling protocols and transmit a message including information on the selected particular fueling protocol to the dispenser.

In this case, an operation may further be included in which the mobility requests the dispenser for information including a list of applicable fueling protocols.

Table 9 shows objectives, pre-conditions, and post-conditions of the operation S404 according to an exemplary embodiment of the present disclosure.

**[Table 9]**

| Type | Description |
|---|---|
| Use case name | UC-4: "Fueling Protocol Negotiation" |
| Objectives | Vehicle and Dispenser determine which fuelling protocol to use for the fuelling. |
| Short Description | Once communication protocol selection is done, the vehicle and the dispenser negotiates on the fuelling protocol to use for the fuelling. The negotiation starts when the vehicle sends a list of its supported protocols and then the dispenser picks a common protocol supported by both and the vehicle prefers the most. |
| Pre-conditions | A communication protocol is selected. |
| Post-conditions | The vehicle and the dispenser reached an agreement on which fuelling protocol to use for their fuelling. |

Table 10 shows contents of the message transmitted or received in the operation S 1210 according to an exemplary embodiment of the present disclosure.

**[Table 10]**

| Element Name | Type | Semantics |
|---|---|---|
| fuelProts | FuellingProtocolType | Fuelling protocols supported by the mobility |

| CommProtocolType | | |
|---|---|---|
| idx | Unsigned integer | Index of the protocol |
| Name | String | Name of the protocol |
| Ver | String | Version of the protocol |
| subprot | String | Optional: Name of the sub-protocol |
| pref | Unsigned integer | Preference of protocols. Smaller number represents higher preference. |

The information on the first fueling protocol may include at least one of an index of the first fueling protocol, a name of the first fueling protocol, a version of the first fueling protocol, a sub-protocol of the first fueling protocol, and a preference for the first fueling protocol. Table 11 shows contents of the message transmitted or received in the operation S1230 according to an exemplary embodiment of the present disclosure.

**[Table 11]**

| Element Name | Type | Semantics |
|---|---|---|
| Index | Unsigned integer | Optional: Index of chosen protocol |
| Result | Enumeration | Result of the protocol negotiation. 'OK' if successful. |
| | | 'FAILED_INCOMPAT' otherwise. |

The message including the information on the second fueling protocol may further include information on whether the negotiation for the fueling protocol was successful or not.

Table 12 shows contents of the message transmitted or received in the operation S1210 according to an exemplary embodiment of the present disclosure.

**[Table 12]**

| Index | Name | Revision | Sub-protocol | Preference |
|---|---|---|---|---|
| 1 | PRHYDE | 2023 | TYPE3-T-initial | 4 |
| 2 | PRHYDE | 2024 | TYPE3-T-Special | 3 |
| 3 | RTR-HFP | | | 2 |
| 4 | ANN-MPC | | | 5 |
| 5 | HMC-FAST | 1.0 | | 1 |

As shown in Table 12, the mobility may provide the dispenser with parameter information in the form of a table, which includes a name, a revision date or year or a version, information on whether a sub-protocol is available, and preference information, for the fueling method or fueling protocol supported by the mobility.

In alternative exemplary embodiment, the dispenser may take the initiative in exchanging the communication protocols and parameters with the mobility. In such a case, the dispenser may assign priorities to the communication protocols supported by the dispenser to provide the mobility with the information of the prioritized communication protocols.

In Table 11, PRHYDE (PROtocol for heavy-duty HYDrogEn refueling) was proposed by one of the European projects having developed heavy-duty mobility hydrogen refueling protocols, RTR-HFP stands for Real-Time Responding Hydrogen Fueling Protocol and was proposed as a type of protocol concept for improving a refueling efficiency based on real-time communications, and ANN-MPC was proposed as a type of protocol concept of collecting and analyzing data from fueling situations and applying a predictive control to the fueling situations.

Examples of the message transmitted in the operation S1230 according to an exemplary embodiment are shown in Tables 13 and 14.

**[Table 13]**

| Fueling Protocol ID | ResultCode |
|---|---|
| 2 | OK |

As shown in Table 13, the dispenser may select a fueling protocol corresponding to an index of 2 and send a response message including a result code of OK to the mobility.

**[Table 14]**

| Fueling Protocol ID | ResultCode |
|---|---|
| | FAIL_NO_COMMON_PROTOCOL |

As shown in Table 14, when the dispenser fails to find a compatible protocol in the list of fueling protocols supported by the mobility received from the mobility, the dispenser may send a response message containing information indicating that there is no common protocol (e.g., FAIL_NO_COMMON_PROTOCOL) in a result code field to the mobility. The examples shown in Tables 13 and 14 may be applicable similarly to in a case where the dispenser selects the second communication protocol among the common communication protocols and responds to mobility in the operation S1130 shown in FIG. 11.

FIG. 13 is a sequence diagram showing a fueling parameter exchange/negotiation operation (S405) that may be applicable in a hydrogen fueling bidirectional communication process according to an exemplary embodiment of the present disclosure.

The fueling parameter exchange/negotiation operation (S405) may include an operation in which the mobility and the dispenser exchange detailed parameters required for executing the fueling protocol.

Referring to FIG. 13, the fueling parameter exchange/negotiation operation (S405) may include an operation (S1310) of transmitting a message, to the dispenser, including information on fueling parameters of the mobility side required by the second fueling protocol selected as a result of the fueling protocol negotiation operation (S404); and an operation (S1350) of receiving a message, from the dispenser, including compatibility information of the dispenser side for the fueling parameters of the mobility side.

The fueling parameter negotiation operation S405 may include an operation S1330 of receiving a message, from the dispenser, including information on the fueling parameters of the dispenser side required by the second fueling protocol selected as a result of the fueling protocol negotiation operation S404; and an operation S1370 of transmitting a message, to the dispenser, including compatibility information of the mobility side for the fueling parameters of the dispenser side.

When the mobility transmits the message including the information on the fueling parameters of the mobility side in the operation S1310, the mobility may set an "Accepted" field for each corresponding parameter to <pending> before transmitting to the dispenser.

Similarly, when the dispenser transmits the message including the information on the fueling parameters of the dispenser side in the operation S1330, the dispenser may set an "Accepted" field for each corresponding parameter to <pending> before transmitting to the mobility.

When the mobility transmits the message including the information on the fueling parameters of the dispenser side in response to the message received in the operation S1330, the mobility may set an "Accepted" field for each corresponding parameter to <OK> or <true> before responding to the dispenser (S1350).

When the dispenser transmits the message including the information on the fueling parameters of the mobility side in response to the message received in the operation S1310, the dispenser may set an "Accepted" field for each corresponding parameter to <OK> or <true> before responding to the mobility.

The mobility and the dispenser may respond by setting the "Accepted" field for each parameter. The "Accepted" field for a parameter for which the negotiation has not reached an agreement, the "Accepted" field may be set to <false>.

The mobility and the dispenser may reach an agreement for all the fueling parameters by repeatedly sending and receiving the messages and responding to received messages.

The parameters exchanged between the dispenser and the mobility may include parameters for supporting fueling method compatibility, parameters related to physical characteristics, monitoring parameters, and parameters related to acceptance.

The compatibility related parameters may include a pressure class and a CHSS category. The physical characteristics related parameters may include a maximum allowed CHSS pressure, a maximum allowed CHSS temperature, a maximum allowed flow, and a CHSS volume. The monitoring parameters may include a current CHSS pressure and a current CHSS temperature. The acceptance related parameters may include information indicating whether it is accepted or not, i.e., a parameter indicating yes (true) or no (false). Each of the parameters described above may include information corresponding to one of predefined levels or settings as well as information regarding a same or different main UCDC level.

Meanwhile, the dispenser may send information of second parameters (i.e., Dispenser's parameters) supported by the dispenser and an OK message indicating a receipt of the first parameters to the mobility (S1330, S1370).

The second parameters related to the fueling protocol exchange/negotiation may include parameters for supporting fueling method compatibility, parameters related to physical characteristics, fueling goal (target SoC) parameters, monitoring parameters, and parameters related to acceptance.

The compatibility related parameters may include a fueling delivery temperature and a selected fueling table. The physical characteristics related parameters may include a maximum fuel delivery pressure, a maximum fuel delivery temperature, a minimum fuel delivery temperature, and a maximum fuel delivery flow rate. The fueling target parameters may include a target SOC, a target final CHSS pressure, a target final CHSS temperature, a target APR, and a target or expected fueling duration. The monitoring parameters may include a current fuel delivery temperature and an ambient temperature. The acceptance related parameters may include information indicating whether it is accepted or not. Each of the parameters described above may include information corresponding to one of predefined levels or settings as well as information regarding a same or different main UCDC level.

As described above, the mobility may provide the dispenser with the parameters listed in the form of a table. The listed parameters may include FCEV parameters compatible with the UCDC level negotiated in the fueling protocol negotiation procedure.

As mentioned above, after the communication link is established and the communication protocol and the fueling protocol are selected in the protocol negotiation phase, the mobility and the dispenser may exchange various parameters to determine whether they can perform a compatible fueling procedure. Here, the information required to perform a safe and efficient fueling procedure may include the compatibility related parameters, the physical characteristics related parameters, the fueling target parameters, and the monitoring parameters.

The compatibility related parameters may include the fueling protocol category and the fuel delivery temperature. The physical characteristics related parameters may include the CHSS pressure and the maximum allowed flow. The fueling target parameters may include the target SOC and the target CHSS pressure. The monitoring parameters may include the current CHSS temperature and the ambient temperature.

In case that no compatible parameters can be found and the fueling cannot proceed, the mobility may return to the communication protocol negotiation procedure to attempt to negotiate another protocol or to stop fueling to the dispenser. In the communication protocol negotiation procedure after the failure of the fueling parameter exchange, the mobility may propose a set of supported protocols to the dispenser excluding the protocols that failed in the fueling parameter exchange procedure.

After the fueling protocol is negotiated in the use case UC-4 described above, the mobility and the dispenser may negotiate specific parameters for the fueling protocol, notify static or dynamic states, and exchange detailed fueling parameters to determine the fueling targets. In case that the fueling parameter negotiation fails due to the incompatibility of the parameters, the dispenser and the mobility may return to the use case UC-3 to select another fueling protocol or return to the use case UC-1 to select another communication protocol. If the use cases UC-3 and UC-1 are not performed normally, the dispenser and the mobility may terminate the current communication.

According to the above configuration, some fueling protocols may be performed on a no-communication scheme basis. Another fueling protocols may require the unidirectional IrDA communication. Another fueling protocols may require the bidirectional communication. Another fueling protocols may require both the bidirectional communication and the unidirectional IrDA communication.

Some fueling protocols may require a predetermined UCDC level or a higher UCDC level. At least one fueling protocol may be proposed based on the category or type of the hydrogen fueled mobility and the category or type of the dispenser. The proposed fueling protocols may be assigned with different priorities. The communication protocol and the fueling protocol between the hydrogen fueled mobility and the dispenser may be finally determined based on whether the communication protocol required by the fueling protocol is supported by the hydrogen fueled mobility and/or the dispenser and taking into the priorities of the proposed fueling protocols.

In another exemplary embodiment of the present disclosure, one party of the mobility or the dispenser may first transmit the fueling parameters to the other party, and the other party may respond with a message including newly reconfigured fueling parameters by changing parameters that are not accepted among the received fueling parameters while maintaining parameters that are accepted.

In another exemplary embodiment of the present disclosure, the mobility and the dispenser may perform the parameter negotiation step by step. The mobility and the dispenser may initiate the negotiation for some of the parameters, and perform the exchange/negotiation process for sub-parameters of the parameters for which an agreement has been reached.

In another exemplary embodiment of the present disclosure, each message including the fueling parameters may be set to be regarded as not having been reached an agreement if a response message is not received within a preset message processing time.

Table 15 shows contents of the message including the fueling parameters of the mobility side according to an exemplary embodiment of the present disclosure.

**[Table 15]**

| Name | Unit | Precision | Range/Values | Type | Semantics |
|---|---|---|---|---|---|
| Pressure Class | N/A | N/A | {H35, H70} | Static | Pressure class of the tank |
| CHSS Volume | Liter | 2 decimals | Positive, No-max | Static | Volume of the tank |
| CHSS Pressure | MPa | 2 decimals | Positive, No-max | Dynamic | Current pressure of the tank |
| Emergency Policy | N/A | N/A | {Terminate,Fallback} | Static | Emergency handling policy |

Table 16 shows contents of the message including the fueling parameters of the dispenser side according to an exemplary embodiment of the present disclosure.

**[Table 16]**

| Name | Unit | Precision | Range/Values | Type | Semantics |
|---|---|---|---|---|---|
| Fueling Delivery Temperature | N/A | N/A | {H35, H70} | Static | ... |
| Fueling Temperature | MPa | 2 decimals | Positive, No-max | Dynamic | Current pressure of the tank |
| Emergency Policy | N/A | N/A | {Terminate,Fallback} | Static | Emergency handling policy |

In the fueling parameter negotiation operation (S405), the mobility and the dispenser may send a message containing a range or values of the supported fueling parameters to the counterpart device. The parameters may include physical characteristic related parameters (abbreviated by "physical parameters" hereinbelow), monitoring parameters, safety policy related parameters, and the acceptance related parameters.

The physical parameters may include a receptacle type, a pressure class, a CHSS category, a CHSS type, a CHSS capacity, a maximum allowed CHSS pressure, a maximum allowed CHSS temperature, and a maximum allowed flow. The monitoring parameters may include a current CHSS pressure and a current CHSS temperature. The safety policy related parameters may include an emergency policy and a safety enforcement level. The acceptance related parameters may include information indicating whether it is accepted or not, i.e., a parameter indicating yes (true), no (false), or pending.

The parameters related to the fueling parameter negotiation may include physical characteristic related parameters (i.e., physical parameters), monitoring parameters, fueling target parameters, safety policy related parameters, and the acceptance related parameters.

The physical characteristics related parameters may include the maximum fuel delivery pressure, the maximum fuel delivery temperature, the minimum fuel delivery temperature, and the maximum fuel delivery flow rate. The monitoring parameters may include the current fuel delivery temperature and the ambient temperature. The fueling target parameters may include the selected fueling table, the target SOC, a target final CHSS pressure, a target final CHSS temperature, a target APR, and a target or expected fueling duration. The acceptance related parameters may include information indicating whether it is accepted or not. Each of the parameters described above may include information corresponding to one of predefined levels or settings as well as information regarding a same or different main UCDC level.

The mobility may provide the dispenser with the parameters listed in the form of a table. The listed parameters may include FCEV parameters compatible with the UCDC level negotiated in the fueling protocol negotiation procedure.

Meanwhile, if the fueling parameter negotiation request message is received and the received fueling parameters are compatible with the dispenser, the dispenser may respond to the request message with its own fueling parameters by transmitting a fueling parameter negotiation response message with a negotiation result set to "OK" to the mobility within a prescribed message response time interval.

If the fueling parameter negotiation request message is received but the received fueling parameters are not compatible with the dispenser, the dispenser may respond to the request message by transmitting a fueling parameter negotiation response message with a negotiation result set to "fail" to the FCEV to indicate the incompatibility with the mobility, the FCEV. The negotiation result may indicate a value or information contained in the result code field, and the failure may represent a negation failure at a specific time and may be expressed by an indication of the incompatibility, e.g., 'Fail_incompat'.

Meanwhile, if the mobility receives the fueling parameter negotiation request message but finds that the received fueling parameters are not compatible with the mobility, the mobility may notify the incompatibility to the dispenser by transmitting an error notification message with a "reason" set to a predefined error code.

On the other hand, before starting the fuel delivery, the mobility and the dispenser may verify that all safety conditions are met through the use case UC6 for safety check-in. This operation may be optional, but it is desirable to define a dedicated safety check-in procedure in the fueling protocol to ensure a desired level of safety in a precise and explicit manner.

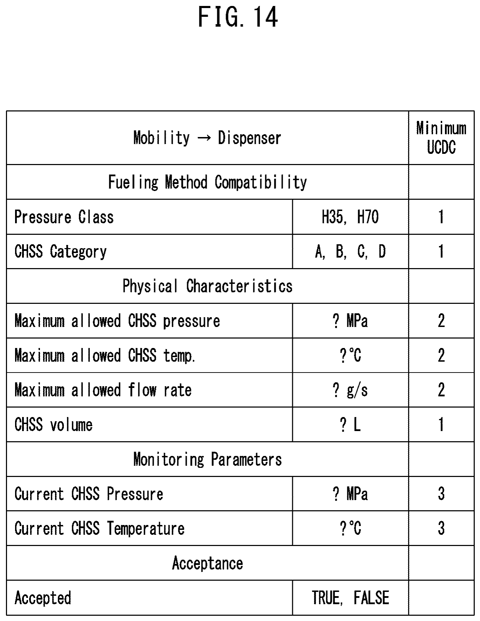

FIG. 14 is a conceptual diagram illustrating a table summarizing parameters transferred from the mobility side to the dispenser side in the fueling parameter exchange process according to an exemplary embodiment of the present disclosure.

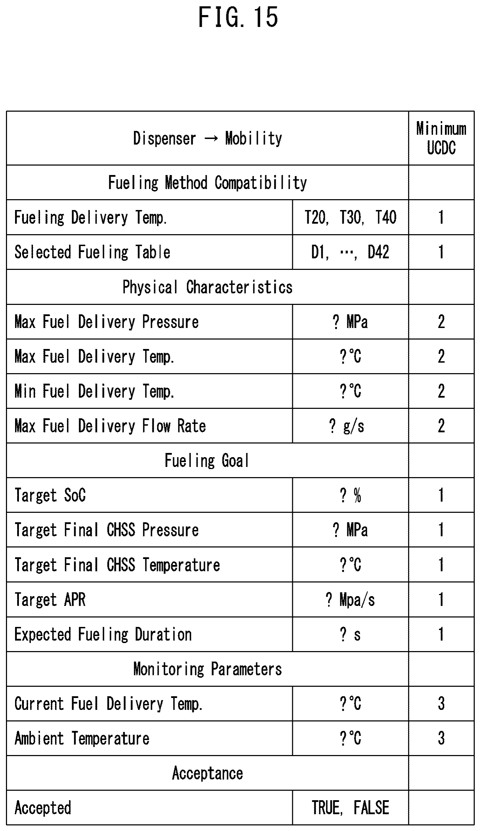

FIG. 15 is a conceptual diagram illustrating a table summarizing parameters transferred from the dispenser side to the mobility side in the fueling parameter exchange process according to an exemplary embodiment of the present disclosure.

Referring to FIGS. 13 and 15 together, a method of exchanging parameters over communication for hydrogen fueling according to an exemplary embodiment, which is performed by a communication controller of the hydrogen fueled mobility 100, may include: an operation S1310 of transmitting, to a communication entity related to the dispenser 200, a first parameter comprising at least one of one or more first hydrogen fueling method compatibilities supported by the mobility 100 and one or more first physical properties; and an operation S1330 of receiving, from the communication entity related to the dispenser 200, a response message comprising a second parameter including at least one of one or more second hydrogen fueling method compatibilities supported by the dispenser, one or more second physical properties, and a fueling goal.

The communication entity related to the dispenser 200 may be the electronic controller 210 of the dispenser 200 or may be a separate communication device mounted on the dispenser 200. Alternatively, an electronic controller or a separate communication device in the fueling station system 220 may communicate with the mobility/mobility 100 in place of the dispenser 200.

The first parameter may further include a first monitoring parameter supported by the mobility 100. The second parameter may further include a second monitoring parameter supported by the dispenser 200.

In the parameter exchanging method over communication for hydrogen fueling process according to an exemplary embodiment of the present disclosure, the parameter exchange process may be terminated based on a confirmation message (e.g., OK message) included in the response message. The parameter exchange process may be terminated when the mobility 100 and the dispenser 200 accept all the exchanged parameters. The parameter exchange process may also be terminated when either party does not accept the exchanged parameters. In case where either party does not accept the exchanged parameters, the protocol negotiation process may be revisited according to a procedure described below or the fueling session may be terminated.

In the parameter exchanging method over communication for hydrogen fueling process according to an exemplary embodiment of the present disclosure, the one or more first hydrogen fueling method compatibilities may include one or more of a pressure class and a CHSS category of the mobility 100.

In the parameter exchanging method over communication for hydrogen fueling process according to an exemplary embodiment of the present disclosure, the one or more first physical properties may include one or more of a maximum allowed CHSS pressure, a maximum allowed CHSS temperature, a maximum allowed flow rate, and a CHSS volume.

In the parameter exchanging method over communication for hydrogen fueling process according to an exemplary embodiment of the present disclosure, the first parameter further comprises a parameter related to an acceptance of the mobility 100.

In the parameter exchanging method over communication for hydrogen fueling process according to an exemplary embodiment of the present disclosure, the first monitoring parameter may include one or more of a current CHSS pressure and a current CHSS temperature.

In the parameter exchanging method over communication for hydrogen fueling process according to an exemplary embodiment of the present disclosure, the one or more second hydrogen fueling method compatibilities may include one or more of a fueling delivery temperature and a selected fueling table of the dispenser 200. The selected fueling table may include a sequence table of a selected fueling protocol, and may be included in the OK message shown in an operation S 1330.

In the parameter exchanging method over communication for hydrogen fueling process according to an exemplary embodiment of the present disclosure, the one or more second physical properties may include one or more of a maximum fuel delivery pressure, a maximum fuel delivery temperature, a minimum fuel delivery temperature, and a maximum fuel delivery flow rate.

In the parameter exchanging method over communication for hydrogen fueling process according to an exemplary embodiment of the present disclosure, the fueling goal may include one or more of a target SoC, a target final CHSS pressure, a target final CHSS temperature, a target average fueling rate (APR), and an expected fueling duration.

In the parameter exchanging method over communication for hydrogen fueling process according to an exemplary embodiment of the present disclosure, the second parameter may further include a parameter related to an acceptance of the dispenser 200.

In the parameter exchanging method over communication for hydrogen fueling process according to an exemplary embodiment of the present disclosure, the second monitoring parameter may include one or more of a current fuel delivery temperature and an ambient temperature.

The mobility 100 may provide the dispenser 200 with first parameters compatible with the UCDC level negotiated in the protocol negotiation process in a form of a table in the operation S1310.

The dispenser 200 may provide the mobility 100 with second parameters compatible with the UCDC level negotiated in the protocol negotiation process in a form of a table in the operation S1310. At this time, the second parameters may be provided along with a message indicating an acceptance of the first parameters provided in the operation S1310.

If the mobility 100 or the dispenser 200 does not accept the exchanged parameters, the mobility 100 may perform the protocol negotiation process again. Alternatively, if the mobility 100 or the dispenser 200 does not accept the exchanged parameters, the mobility 100 may terminate the fueling session.

In a protocol negotiation process retried due to a failure of the parameter exchange process in which the mobility 100 or the dispenser 200 did not accept the exchanged parameters, the mobility 100 may propose a set of supported protocols other than the protocols having been provided in the failed parameter exchange process.

Table 17 shows contents of the message including the fueling parameters of the mobility side according to another exemplary embodiment of the present disclosure.

**[Table 17]**

| Physical Parameters | |
|---|---|
| Receptacle Type | ? |
| Pressure Class | H35/H70 |
| CHSS Category | A/B/C/D |
| CHSS Type | 1/2/3/4 |
| CHSS Volume | ? L |
| Maximum allowed CHSS Pressure | ? MPa |
| Maximum allowed BHSS temp. | ? °C |
| Maximum allowed flow rate | ? g/s |
| Monitoring Parameters | |
| Current CHSS Pressure | ? MPa |
| Current CHSS Temp. | ? °C |
| Safety Policy | |
| Emergency Policy | ? |
| Safety Enforcement Level | ? |
| Acceptance | |
| Accepted | TRUE/FALSE/PENDING |

Table 18 shows contents of the message including the fueling parameters of the dispenser side according to another exemplary embodiment of the present disclosure.

**[Table 18]**

| Physical Parameters | |
|---|---|
| Fueling Delivery temp. | T30 |
| Max Fuel Delivery Pressure | ? MPa |
| Max Fuel Delivery Temp. | ? °C |
| Min Fuel Delivery Temp. | ? °C |
| Mas Fuel Delivery Flow Rate | ? g/s |
| Monitoring Parameters | |
| Current Fuel Delivery Temp. | ? °C |
| Ambient Temperature | ? °C |
| Fueling Goal | |
| Selected Fueling Table | D1 |
| Target SoC | ? % |
| Target Final CHSS Pressure | ? MPa |
| Target Final CHSS Temperature | ? °C |
| Target APR | ? MPa/s |
| Expected Fueling Duration | ? °C |
| Safety Policy | ? s |
| Acceptance | |
| Accepted | TRUE/FALSE/PENDING |

The communication method according to an exemplary embodiment of the present disclosure may further include an operation of renegotiating at least one of the communication protocol and the fueling parameters in case where the fueling parameters are incompatible between the mobility and the dispenser as a result of the fueling parameter negotiation (S405). In such a case, the renegotiation operation in the communication method according to an exemplary embodiment may include performing the operations S403, S404, and S405 again. For example, the procedure may go back to the operation S403 to perform the renegotiation in the operation S403, and then perform the operations S404 and S405 sequentially again. In another embodiment, the procedure may go back to the operation S404 to perform the renegotiation in the operation S404, and then perform the operation S405 again.

In the communication method according to another exemplary embodiment of the present disclosure, the renegotiation operation may the operations S403, S404, and S405 in simplified patterns or omit some of the processes. Alternatively, the renegotiation operation may combine the operations S403 and S404 to negotiate the communication protocol and the fueling protocol together.

In the communication method according to another exemplary embodiment of the present disclosure, the renegotiation operation may be performed based on lists of communication protocols or fueling protocols other than the communication protocol or the fueling protocol selected in the operations S403 and S404, respectively. For example, the communication protocol and the fueling protocol may be negotiated together using a protocol list including both communication protocols and the fueling protocols based on common supportabilities of the communication protocols and the fueling protocols in the mobility and the dispenser based on the compatibility and/or the interoperability information identified in the operation S401.

A communication method according to an exemplary embodiment of the present disclosure may further include an operation of determining a third communication protocol and a third fueling protocol based on a prescribed policy when the fueling parameters are incompatible between the mobility and the dispenser as a result of the fueling parameter negotiation (S405); and an operation of supplying hydrogen based on the third communication protocol and the third fueling protocol. In this case, the third fueling parameters may be determined based on the third fueling protocol, and the operation of supplying hydrogen may be performed based on the third fueling protocol and the third fueling parameters.

For example, if the communication between the mobility and the dispenser is not possible due to a change in the communication environment, the dispenser may fall back to the No-communication scheme and supply hydrogen using the hydrogen fueling protocol based on the No-communication scheme.

The communication method according to an exemplary embodiment of the present disclosure may include an operation S409 of terminating the communication between the dispenser and the mobility when the fueling parameters are incompatible between the mobility and the dispenser as a result of the fueling parameter negotiation.

Referring back to FIG. 4, the safety check-in procedure may be employed in the bidirectional communication process for hydrogen fueling according to an exemplary embodiment of the present disclosure.

In the safety check-in operation S406, the dispenser and the mobility including the mobility may check whether all necessary safety conditions are satisfied before the actual fueling starts.

After the fueling parameters are exchanged and the mobility and the dispenser are considered compatible, the mobility and the dispenser may perform a safety status check to determine whether the fueling may be performed safely. Depending on the fueling protocol, the safety check may be performed implicitly within the protocol. Further, the safety check-in operation S406 may be omitted depending on the implementation.

During the safety check-in operation S406, the mobility and/or the dispenser may check whether an engagement of the nozzle and receptacle is locked, check whether there is any leak, and check a last-minute status.

In case that the mobility have received the fueling parameter negotiation response message from the dispenser and the fueling protocol supports the safe check-in function, the mobility may initiate the safety check-in operation S406 by transmitting a safety check-in request message to the dispenser within a message sequence setting time interval.

The mobility and the dispenser may exchange messages for coupler check. The mobility may send a message including information indicating its own coupler check result (e.g., "Mobility:OK") to the dispenser, and the dispenser may send a message including information indicating its own coupler check result (e.g., DP:OK) to the mobility.

The mobility and the dispenser may exchange messages related to a gas leakage check. During the exchange of the messages related to the gas leakage check, the dispenser may send information indicating that the leakage check is in progress ("Ongoing") to the mobility. Also, the mobility may send information indicating that the mobility is waiting for a leakage check result from the dispenser ("waiting") to the dispenser. When the leakage check is completed, the dispenser may send a message requesting a measured tank volume together with information indicating that the leakage check is completed ("Done") to the mobility.

The dispenser may send a message for immobilized status check to the mobility (S1580), and the mobility may send a message indicating that it is ready for the status check to the dispenser.

If the mobility reports parameters on the current status or immobilized status of the mobility to the dispenser, the dispenser may report parameters on a coupler lock status, a leakage check status, and a predicted mobility tank capacity to the mobility.

After the safety check-in operation S406 described above is completed, the actual fueling may start. During the fueling, the mobility and the dispenser may exchange information for monitoring various status parameters to ensure that the fueling is performed safely and efficiently. If necessary, the mobility or the dispenser may send a control message requesting an action from the other party to control the fueling procedure or to respond to a safety-related condition. The parameters to be exchanged and commands may vary depending on the actual fueling protocol.

The operation S407 represents a monitoring and control procedure that may be employed in the bidirectional communication process for hydrogen fueling according to an exemplary embodiment of the present disclosure.

In the monitoring and control operation S407, the dispenser and/or the mobility including the mobility may monitor the fueling status and control the fueling process if necessary. The mobility and the dispenser may proceed with the fueling process according to the selected fueling protocol and using the parameters while all safety checks are confirmed. During the fueling, the mobility and the dispenser may exchange various measurement data to determine the fueling status and detect safety-critical incidents as quickly as possible.

In addition, the mobility may send certain commands to the dispenser to control the fueling procedure such as the start or the termination of the fueling. At this time, the mobility may use UDP with DTLS for the communication to support black channel communication. The black channel communication may refer to a communication that applies a black channel principle ensuring a secure communication despite the output characteristics of the communication channel which may be unsecure or has a property unrelated to an application.

The monitoring and control operation S407 will be described in more detail. The mobility may send a message to the dispenser to start the fueling control, and in response, the dispenser may send a message including a confirmation (e.g., "OK") to the mobility.

In addition, the mobility may send a message including information of its own fueling loop (e.g., x, y, z) to the dispenser, and the dispenser may send a message including information of its own fueling loop (e.g., a, b, c) corresponding to the mobility's fueling loop to the mobility.

Additionally, the mobility may send a fueling control request message, to the dispenser, including information for slowing down the fueling or reduce the amount of delivered fuel (S1660), and the dispenser may send a response message including information indicating a slowing in the fueling flow to the mobility (S1670).

In addition, the mobility may send a fueling control request message to request a stop of the fueling to the dispenser (S1680). The dispenser may send a fueling status response message including information that fueling is stopped or has been stopped to the mobility (S1690).

According to the monitoring and control procedure, the mobility and the dispenser may exchange the parameters related to the fueling status continuously or periodically. The mobility may send information such as the current tank temperature, the current tank pressure, and so on to the dispenser, and the dispenser may provide the mobility with parameters related to the start, stop, ramping up, or ramping down of the fueling, the current injection pressure, a fueling plan, and so on.

The message sent by the mobility to the dispenser regarding a fueling control request may include information or parameters related to the start, pause, resume, and/or termination of the fueling and so on. In addition, a message related to a report sent by the mobility to the dispenser may include information or parameters such as current tank temperature and the current tank pressure.

The message sent by the dispenser to the mobility regarding the report may include information or parameters related to the status information, the current ambient temperature, a current pressure ramp rate (PRR), a delivery fuel flow rate, a current fuel delivery temperature, a pre-cooling temperature, a current fuel delivery pressure, whether a full fueling is in use, whether a cooling dispenser is in use, whether the fallback is in use, a reason for a fueling stop, a current amount of hydrogen delivered, for example.

A message related to a target parameter update sent by the dispenser to the mobility may include the target final tank pressure, the target final tank temperature, the target fueling APR, the target SOC, the current SOC, and the estimated remaining duration.

Meanwhile, when TCP is used in the monitoring and control operation S407, if the safety check-in response message or the safety check-in procedure according to the fueling protocol is omitted, the mobility may transmit a fueling loop request message to the dispenser within the message sequence setting time interval after receiving the fueling parameter negotiation response message from the dispenser. The request message or response message related to the fueling loop may be transmitted through a DTLS message.

After completing the hydrogen fueling through the monitoring and control operation S407, before terminating the session and detaching the nozzle from the mobility, the mobility and the dispenser may check whether the mobility and the dispenser satisfies all safety conditions through the safety check-out use case. The safety check-in procedure may be optional, but it is desirable to define a dedicated safety check-in procedure in the fueling protocol to ensure a desired level of safety in a precise and explicit manner.

The safety check-out procedure S408 that may be employed in the bidirectional communication process for hydrogen fueling according to an exemplary embodiment of the present disclosure may be performed as follows. The mobility and the dispenser may check that all necessary safety conditions are satisfied before the nozzle of the dispenser is disconnected from the receptacle of the mobility through the safety check-out procedure. In other words, the mobility and the dispenser may verify that it is absolutely safe for a user or operator to disconnect the nozzle from the mobility after the fueling is completed.

For example, if the mobility receives the fueling loop response message from the dispenser with a "Result" attribute set to "OK" or a "Status" attribute set to "finished", or the mobility receives the fueling status response message including information that fueling is stopped, and if the hydrogen fueling protocol supports the safety check-out, the mobility may initiate the safety check-out and perform the safety check-out operation S408 by transmitting a safety check-out request message to the dispenser within a message sequence setting time period.

The mobility and the dispenser may repeatedly report their status to each other until the safety checks are verified. If the bidirectional communication process for hydrogen fueling does not require such safety checks at the end, the use case for the safety check-out may be omitted.

The safety check-out operation S408 will be described in more detail. The mobility may send a message containing information on a coupler check result (e.g., "OK") to the dispenser, and the dispenser may send a message containing information indicating that the coupler check is in progress (e.g., "Ongoing") to the mobility.

In addition, the mobility may send again a message containing information on the coupler check result (e.g., "OK") to the dispenser, and the dispenser may send a message containing information indicating that the coupler check is completed (e.g., "Done") to the mobility.

When the coupler check result shows that the coupler check was completed normally, the nozzle of the dispenser may be separated from the receptacle of the mobility by the user or operator.

In the safety check-out operation S408, the reporting message sent by the dispenser to the mobility may include information or parameters about a coupler unlock status. The coupler unlock status information may include information of locked, unlocked, icing, or problems.

When the fueling according to the hydrogen fueling protocol is completed and the nozzle is safely separated, or when a non_safety-critical problem occurred during another use case, the termination use case UC9 may be performed.

The termination procedure S409 that may be employed in the bidirectional communication process for hydrogen fueling according to an exemplary embodiment of the present disclosure may be performed as follows.

In the termination operation S409, which is the final stage of fueling, the mobility and the dispenser may exchange information on the fueling result regarding the fueling performance and method and/or information on the reason for an unexpected stopping of the fueling to complete all operations related to the hydrogen fueling. The termination use case may also be configured to handle tasks related to the non_safety-critical issues when they occur.

For example, after the mobility receives the safety check-out response message from the dispenser with a "Result" attribute set to "DONE" or the fueling loop response message with the "Status" attribute set to "Finished" or including information that fueling is stopped, the mobility may transmit a termination request message to the dispenser to perform the termination operation S409.

The termination operation S409 will be described in more detail. The mobility may send a message to the dispenser to query how much fueling has been fueled from the dispenser. The dispenser may send a response message including information on the amount of hydrogen fueled (e.g., X gram) in response to the query message to the mobility.

Subsequently, the mobility may send a confirmation request message for a completion of the fueling to the dispenser, and the dispenser may send a good-bye message to the mobility as a response message to the confirmation request message.

After the fueling is completed and the safety check is performed, the mobility and the dispenser may exchange at least some of book-keeping information for a fueling session of hydrogen fueling in the termination operation S409. The mobility and dispenser may exchange summary information on the hydrogen fueling session before completing the termination operation S409.

The book-keeping information may include all information related to the hydrogen fueling recorded in the mobility or the dispenser according to prescribed rules or policies throughout all fueling sessions for the hydrogen fueling and prior to completing the termination operation S4 of the use case UC-9.

The book-keeping information or the summary information may include information on how much fuel was dispensed and what report was generated. In addition, the reporting message transmitted by the mobility to the dispenser may include information or parameters related to the current tank temperature and the current tank pressure. Meanwhile, the reporting message transmitted by the dispenser to the mobility may include information on the final SOC, the final average fueling rate (APR), the final measured tank pressure, the actual fueling time, and the actual amount of the hydrogen fueled.

When all necessary information for the fueling session is stored, the fueling session may be completely terminated.

Examples of communication data exchanged in some of the use cases UC5-UC9 are summarized in Table 19.

**[Table 19]**

| UC | From Dispenser to Vehicle | From Vehicle to Dispenser |
|---|---|---|
| Fueling Parameter Negotiation | Communication capability | Communication capability |
| | Fueling protocol | Maximum pressure |
| | Fueling (cooling) temperature | Maximum temperature |
| | Target fueling pressure | Maximum flow rate |
| | Target expected tank temperature after fueling | Tank temperature |
| | | Tank pressure |
| | Target fueling amount (SOC %) | Tank volume |
| | Target fueling time | Fueling pressure (e.g., 350, 700) |
| | Ambient temperature | |
| Safety Check-in | Nozzle-receptacle coupling status | Tank temperature |
| | CHSS leakage check result | Tank pressure |
| | Vehicle tank volume predicted by fueling station (Check suitability of usage) | Tank volume |
| Monitoring and Control | Fueling (cooling) temperature | Tank temperature |
| | Target fueling pressure | Tank pressure |
| | Target expected tank temperature after fueling | Tank volume |
| | | Fueling stop request |
| | Target fueling amount (SOC %) | |
| | Ambient temperature | |
| | Target fueling rate | |
| | Actual fueling rate | |
| | Target fueling time | |
| | Actual fueling time | |
| | Fueling flow rate | |
| | Fueling status(start/fueling/stop/pause) | |
| | Communication status | |
| | Reason for fueling stop (Normal termination/low pressure at fueling station/communication error) | |
| | Whether full (top-off) or not | |
| | Whether cold dispenser or not | |
| | Whether fallback is to be performed | |
| Safety Check-out | Nozzle-receptacle separability (separable/icing) | Tank temperature |
| | | Tank pressure |
| | | Tank volume |
| Termination | Target fueling amount | |
| | Actual fueling amount | |
| | Target fueling rate | |
| | Actual fueling rate | |
| | Target fueling pressure | |
| | Actual fueling pressure | |
| | Target tank temperature | |
| | Actual tank temperature | |
| | Target fueling time | |
| | Actual fueling time | |

Meanwhile, the error handling use case UC10 is a functional block for handling a situation in which a security-uncritical error occurs because of a shutdown of the fueling procedure similar to a normal termination or a sudden interruption of the communication. The error handling procedure that may be employed in the bidirectional communication process for hydrogen fueling according to an exemplary embodiment of the present disclosure may be performed as follows.

The error handling operation S410 may include a definition of an error condition related to the fueling protocol, provision of a detection criterion, and a responding procedure including a notification, the termination procedure, and the fallback mechanism when an error occurs.

The error handling operation S410 may be applicable when a non_safety-critical error occurs and further communication is impossible. According to the error handling procedure, the mobility and the dispenser may handle the occurrence of the non_safety-critical error at any time during the fueling. When the non_safety-critical error occurs, the mobility and the dispenser may immediately stop the fueling, temporarily stop the use case previously selected and currently being operated, and then proceed with the termination use case UC9.

If the mobility detects an event related to the non_safety-critical error, the mobility may notify the dispenser of the termination reason through a termination request message and stop the current fueling session or the communication session. The dispenser may terminate the current communication session in response to the termination request message. If further communications are impossible, the current session may be terminated without an additional notification.

When a non_safety-critical error is detected in the mobility and the communication channel maintains an operable condition, the mobility may send the termination request message to the dispenser with an "Action" attribute set to "Stop" and a "Reason" attribute set to an appropriate reason or reason code. An example of the appropriate reason or reason code may include a reason such as "message is corrupted".

The termination request message may be sent in error situations where a non_safety-critical communication error, a system error, or a qualitative error occurred excluding unrecoverable cases.

That is, for a successful refueling, the communication must convey actions or operations that may be expected according to the protocol, and the refueling operation needs to be within an acceptable range of the fueling protocol. However, various abnormal events may occur in practice. While some of the errors are trivial and may be easily handled, some of the other errors are unrecoverable and may prevent the fueling from proceeding. The error handling operation S410 enables to define the non_safety-critical error conditions and provide exemplary error conditions and possible responses.

Examples of communication errors may include instances where the communication is disconnected, received data cannot be recognized due to an encoding error or a syntax error, or the received data is outside a permissible range. System errors may include an instance where the dispenser or mobility detects a critical system error on its own. Qualitative errors may include an instance where the quality of communication performance does not meet a required level, or the quality of data integrity or precision fails to meet a required level.

The bidirectional communication process for hydrogen fueling according to the present embodiment may perform the following specific error handling operations S410 as outlined in (1) to (4) for the above-described error conditions.
(1) In case where a non_safety-critical error occurred and further communication is not possible, the mobility and dispenser may immediately stop the fueling but may take a safe action and terminate the session by stopping the communication.
(2) In case where a non_safety-critical error occurred and the fueling is paused without being completed, the fueling protocol may define the fallback mechanism, for example, by defining the non-communication fueling method.
(3) In case where a non_safety-critical error is detected in the mobility and the communication channel is still operational, the mobility may send the termination request message to the dispenser with the "Action" attribute set to "Stop" and the "Reason" attribute set to an appropriate reason or reason code.
(4) In case where a non_safety-critical error is detected by the dispenser and the communication channel is still operational, the dispenser may immediately stop the fueling and send the termination request message to the dispenser with the "Action" attribute set to "Stop" and the "Reason" attribute set to an appropriate reason or reason code.

As described above, the bidirectional communication process for hydrogen fueling including the fueling protocol may define the error conditions related to the fueling protocol, provide the detection criteria, and perform the error handling operation S410 including the notification, the termination operation S409, and the fallback mechanisms when an error is detected according to the detection criteria.

Meanwhile, when a safety-critical issue occurs during the fueling in the hydrogen fueling system, an urgent action/handling may be required.

The emergency handling procedure S411 that may be employed in the bidirectional communication process for hydrogen fueling according to an exemplary embodiment of the present disclosure may be performed as follows.

The emergency handling operation S411 may define safety-critical conditions requiring an emergency action during the fueling and may include responding procedures to prevent safety-critical accidents.

For the safe fueling, the communication must convey actions or operations that may be expected according to the protocol, and the refueling operation needs to be within a safe range of the fueling protocol. However, a problem may occur during the fueling, causing the fueling system to reach a critical state that must be avoided at all costs. The emergency handling operation S411 enables to define safety-critical emergency conditions and possible actions or operations to the emergency conditions, and may provide important cases to consider.

The fueling protocol may define emergency conditions related to the protocol, provide detection criteria for the emergency conditions and performance requirements of the mobility or the dispenser, and prescribe responding procedures S411 to avoid entering a hazardous situation.

In more detail, when a high pressure condition exceeding a preset reference value is detected by the mobility during the hydrogen fueling process, the mobility may send a first emergency stop request message including information requesting a fueling stop according to the high pressure (e.g., "Emg:Stop (High Pressure)") to the dispenser. The dispenser may send a response message including information indicating that the dispenser is processing an emergency fueling stop (e.g., "Emg:Stopping") to the mobility in response to the first emergency stop request message.

In addition, upon receiving the response message or after a preset time has elapsed from a receipt of the response message, the mobility may send the first emergency stop request message again to the dispenser. After urgently stopping the fueling, the dispenser may send a response message including information indicating that the fueling has been urgently stopped (e.g., "Emg:Stopped") to the mobility.

Meanwhile, if a hydrogen fuel leakage is detected by the dispenser during the hydrogen fueling process, the dispenser may send a second emergency stop request message including information indicating that it is processing a fueling stop due to the leakage (e.g., "Emg:Stopping (Leaking)") to the mobility. The mobility may send a response message including information indicating an acknowledgement of the second emergency stop request message (e.g., "Emg:Confirmed") to the dispenser.

In addition, the dispenser may send a third emergency stop notification message including information indicating that the fueling has been stopped because of the leakage (e.g., "Emg:Stopped (Leaking)") to the mobility. The mobility may send a response message including information indicating an acknowledgement of the third emergency stop notification message (e.g., "Emg:Confirmed") to the dispenser.

According to the configuration described above, when the mobility or the dispenser detects a critical situation affecting the safety, the mobility and/or the dispenser may take necessary measures immediately to prevent a disaster from occurring, and, if possible, transmit an emergency notification message containing information on the situation to the other party and block the communication between the mobility and the dispenser.

Upon receiving the emergency notification message, the mobility or the dispenser may immediately respond to a situation indicated in the emergency notification message and terminate the communication without an excessive delay. The emergency notification message may include a header and a body including a message. The header may include information indicating an emergency notification, and the message may include values, information, or parameters for the class, type, and action of the emergency notification.

The emergency notification message may be transmitted by a TLS or DTLS message depending on the technology used for communication.

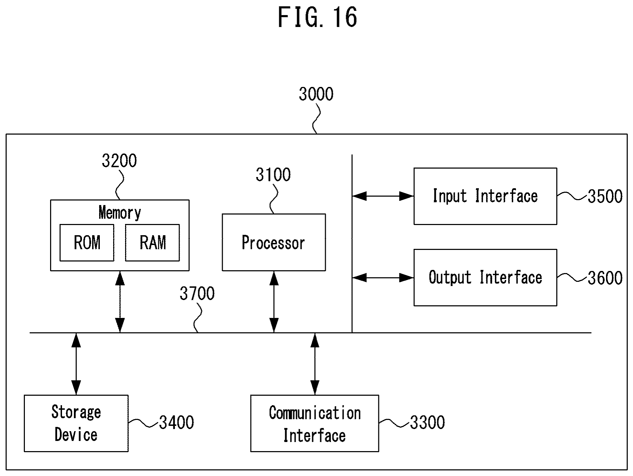

FIG. 16 is a schematic block diagram illustrating a physical configuration of a generalized computing system that may be operating as a communication device/entity, a communication controller, and/or an electronic controller for hydrogen fueling and may be mounted on the hydrogen fueled mobility, a dispenser, and/or a fueling station according to an exemplary embodiment of the present disclosure.

Although not illustrated in FIGS. 1-15, a processor and a memory may be electrically connected to each component, so that the operation of each component may be controlled or managed by the processor.

At least some of the processes for the fueling communication method according to an embodiment of the present disclosure may be performed by the computing system 3000 of FIG. 16.

The computing system 3000 according to an embodiment of the present disclosure may include at least one processor 3100 and a memory 3200 storing program instructions instructing the at least one processor 3100 to perform at least one process step. At least some of the operations or process steps of the method according to an embodiment of the present disclosure may be performed by the at least one processor 3100 loading the program instructions from the memory 3200.

The processor 3100, which executes the program instructions or commands stored in the memory 3200, may include a central processing unit (CPU) or a graphics processing unit (GPU) or may be implemented by another kind of dedicated processor suitable for performing the method of the present disclosure.

Each of the memory 3200 and a storage device 3400 may include at least one of a volatile storage medium and a non-volatile storage medium. For example, the memory 3200 may be comprised of at least one of a read only memory (ROM) and a random access memory (RAM).

Additionally, the computing system 3000 may include a communication interface 3300 that performs communications through a wireless communication network.

Additionally, the computing system 3000 may further include the storage device 3400, an input interface 3500, and an output interface 2600.

The components of the computing system 3000 may be connected to each other by a system bus 3700 to communicate with each other.

A device including the processor 3100 according to an exemplary embodiment of the present disclosure may be any data processing device capable of communications through a network such as a desktop computer, a laptop computer, a notebook PC, a smartphone, a tablet PC, a mobile phone, a smart watch, smart glasses, an e-book reader, a portable multimedia player (PMP), a portable game console, a navigation device, a digital camera, a digital multimedia broadcasting (DMB) player, a digital audio recorder, a digital audio player, a digital video recorder, a digital video player, and a personal digital assistant (PDA).

The communication device/apparatus for hydrogen fueling according to an exemplary embodiment of the present disclosure is mounted on the hydrogen fueled mobility and/or the dispenser to perform the communications between the hydrogen fueled mobility and the dispenser, and may include the processor 3100 receiving the at least one instruction from the memory 3200 and executing the at least one instruction.

The communication controller of the hydrogen fueled mobility 100 according to an exemplary embodiment of the present disclosure may include the memory 3200 storing the at least one instruction and the processor 3100 executing the at least one instruction. The processor 3100 may negotiate the communication protocol with the dispenser supplying hydrogen to the mobility, negotiate the fueling protocol for being fueled with hydrogen from the dispenser with the dispenser, and negotiate the fueling parameters based on the fueling protocol with the dispenser.

The processor 3100 may transmit a message, to the dispenser, including the information on the first communication protocol applicable in the mobility, and receive a message, from the dispenser, including the information on the second communication protocol selected from common communication protocols commonly applicable in both the mobility and the dispenser.

The information on the first communication protocol may include at least one of the index of the first communication protocol, the name of the first communication protocol, the version of the first communication protocol, and the preference for the first communication protocol. The message including the information on the second communication protocol may further include information on whether negotiating the communication protocol was successful.

The processor 3100 may transmit a message including the information on the first fueling protocol applicable in the mobility to the dispenser based on a result of the communication protocol negotiation, and receive a message including the information on the second fueling protocol selected from the common fueling protocols commonly applicable in both the mobility and the dispenser from the dispenser,
The information on the first fueling protocol may include at least one of the index of the first fueling protocol, the name of the first fueling protocol, the version of the first fueling protocol, the sub-protocol of the first fueling protocol, and the preference for the first fueling protocol. The message including the information on the second fueling protocol may further include the information on whether negotiating the fueling protocol was successful.

When negotiating the fueling parameter, the processor 3100 may transmit a message, to the dispenser, including the information on the fueling parameters of the mobility side required by the second fueling protocol selected as a result of the fueling protocol negotiation, and receive a message, from the dispenser, including the compatibility information of the dispenser side for the fueling parameters of the mobility side.

When negotiating the fueling parameter, the processor 3100 may receive a message, from the dispenser, including the information on the fueling parameters of the dispenser side required by the second fueling protocol selected as a result of the fueling protocol negotiation, and transmit a message, to the dispenser, including the compatibility information of the mobility side for the fueling parameters of the dispenser side.

When it is determined during the fueling parameter negotiation that the fueling parameter is incompatible between the mobility and the dispenser, the processor 3100 may renegotiate at least one of the communication protocol and the fueling parameter.

When it is determined during the fueling parameter negotiation that the fueling parameter is incompatible between the mobility and the dispenser, the processor 3100 may determine a third communication protocol and a third fueling protocol based on a prescribed policy. In such a case, the hydrogen fueling may be accomplished based on the third communication protocol and the third fueling protocol.

When it is determined during the fueling parameter negotiation that the fueling parameter is incompatible between the mobility and the dispenser, the processor 3100 may terminate the communication between the dispenser and the mobility.

The processor 3100 may perform the discovery and pairing process with the dispenser using a first communication technology. When a result of the communication protocol negotiation is related to a second communication technology, the processor 3100 may negotiate the fueling protocol and the fueling parameter using the second communication technology.

While the processor 3100 performs the discovery and pairing process, information on interoperability or compatibility may be shared between the mobility and the dispenser.

The communication device for hydrogen fueling that is arranged in the dispenser supplying hydrogen to the hydrogen fueled mobility, may include the memory 3200 storing the at least one instruction, and the processor 3100 executing the at least one instruction. By executing the at least one instruction, the processor 3100 may negotiate the communication protocol with the mobility, negotiate the fueling protocol for supplying hydrogen as fuel to the mobility with the mobility, and negotiate the fueling parameter based on the fueling protocol with the mobility.

On the other hand, although most of the embodiments described above focus on a method where the mobility first transmits the communication protocols or the parameters to the dispenser, the present disclosure is not limited thereto and may be configured such that the dispenser first transmits the communication protocols or parameters of the dispenser to the mobility. Such an embodiment has substantially the same features as the embodiments described above except for the changes in the transmitter and the receiver.

The device and method according to exemplary embodiments of the present disclosure can be implemented by computer-readable program codes or instructions stored on a computer-readable intangible recording medium. The computer-readable recording medium includes all types of recording device storing data which can be read by a computer system. The computer-readable recording medium may be distributed over computer systems connected through a network so that the computer-readable program or codes may be stored and executed in a distributed manner.

The computer-readable recording medium may include a hardware device specially configured to store and execute program instructions, such as a ROM, RAM, and flash memory. The program instructions may include not only machine language codes generated by a compiler, but also high-level language codes executable by a computer using an interpreter or the like.

Some aspects of the present disclosure described above in the context of the device may indicate corresponding descriptions of the method according to the present disclosure, and the blocks or devices may correspond to operations of the method or features of the operations. Similarly, some aspects described in the context of the method may be expressed by features of blocks, items, or devices corresponding thereto. Some or all of the operations of the method may be performed by use of a hardware device such as a microprocessor, a programmable computer, or electronic circuits, for example. In some exemplary embodiments, one or more of the most important operations of the method may be performed by such a device.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A communication method for hydrogen fueling performed by a hydrogen fueled mobility, comprising:
negotiating a communication protocol with a dispenser supplying hydrogen to the hydrogen fueled mobility;
negotiating a fueling protocol for being fueled with hydrogen from the dispenser with the dispenser; and
negotiating a fueling parameter based on the fueling protocol with the dispenser.

2. The communication method for hydrogen fueling as claimed in claim 1, wherein negotiating the communication protocol comprises:
transmitting a message, to the dispenser, including information on a first communication protocol applicable in the hydrogen fueled mobility; and
receiving a message, from the dispenser, including information on a second communication protocol determined from common communication protocols commonly applicable in both the hydrogen fueled mobility and the dispenser.

3. The communication method for hydrogen fueling as claimed in claim 2, wherein the information on the first communication protocol includes one or more of an index of the first communication protocol, a name of the first communication protocol, a version of the first communication protocol, or a preference for the first communication protocol,
wherein the message including the information on the second communication protocol further includes information on whether negotiating the communication protocol was successful.

4. The communication method for hydrogen fueling as claimed in claim 1, wherein negotiating the fueling protocol comprises:
transmitting a message including information on a first fueling protocol applicable in the hydrogen fueled mobility to the dispenser based on a result of a communication protocol negotiation; and
receiving a message including information on a second fueling protocol determined from common fueling protocols commonly applicable in both the hydrogen fueled mobility and the dispenser from the dispenser.

5. The communication method for hydrogen fueling as claimed in claim 4, wherein the information on the first fueling protocol includes one or more of an index of the first fueling protocol, a name of the first fueling protocol, a version of the first fueling protocol, a sub-protocol of the first fueling protocol, or a preference for the first fueling protocol,
wherein the message including the information on the second fueling protocol further includes information on whether negotiating the fueling protocol was successful.

6. The communication method for hydrogen fueling as claimed in claim 1, wherein negotiating the fueling parameter comprises:
transmitting a message, to the dispenser, including information on fueling parameters of a hydrogen fueled mobility side required by a second fueling protocol determined as a result of a fueling protocol negotiation; and
receiving a message, from the dispenser, including compatibility information of a dispenser side for the fueling parameters of the hydrogen fueled mobility side.

7. The communication method for hydrogen fueling as claimed in claim 1, wherein negotiating the fueling parameter comprises:
receiving a message, from the dispenser, including information on fueling parameters of a dispenser side required by a second fueling protocol determined as a result of a fueling protocol negotiation; and
transmitting a message, to the dispenser, including compatibility information of a hydrogen fueled mobility side for the fueling parameters of the dispenser side.

8. The communication method for hydrogen fueling as claimed in claim 1, further comprising:
when it is determined during a fueling parameter negotiation that the fueling parameter is incompatible between the hydrogen fueled mobility and the dispenser, renegotiating one or more of the communication protocol or the fueling parameter.

9. The communication method for hydrogen fueling as claimed in claim 1, further comprising:
when it is determined during a fueling parameter negotiation that the fueling parameter is incompatible between the hydrogen fueled mobility and the dispenser, determining a third communication protocol and a third fueling protocol based on a prescribed policy; and
allowing a supply of hydrogen based on the third communication protocol and the third fueling protocol.

10. The communication method for hydrogen fueling as claimed in claim 1, further comprising:
when it is determined during a fueling parameter negotiation that the fueling parameter is incompatible between the hydrogen fueled mobility and the dispenser, terminating a communication between the dispenser and the hydrogen fueled mobility.

11. The communication method for hydrogen fueling as claimed in claim 1, further comprising:
performing a discovery and pairing process with the dispenser using a first communication technology,
wherein, when a result of a communication protocol negotiation is related to a second communication technology, negotiating the fueling protocol and negotiating the fueling parameter are performed using the second communication technology.

12. The communication method for hydrogen fueling as claimed in claim 1, wherein information on interoperability or compatibility between the hydrogen fueled mobility and the dispenser is shared while the discovery and pairing process is performed.

13. A communication device for hydrogen fueling arranged in a hydrogen fueled mobility, comprising:
a memory storing at least one instruction; and
a processor executing the at least one instruction,
wherein the processor, when executing the at least one instruction, is configured to:
negotiate a communication protocol with a dispenser supplying hydrogen to the hydrogen fueled mobility;
negotiate a fueling protocol for being fueled with hydrogen from the dispenser with the dispenser; and
negotiate a fueling parameter based on the fueling protocol with the dispenser.

14. The communication device as claimed in claim 13, wherein, when negotiating the communication protocol, the processor is configured to:
transmit a message, to the dispenser, including information on a first communication protocol applicable in the hydrogen fueled mobility; and
receive a message, from the dispenser, including information on a second communication protocol determined from common communication protocols commonly applicable in both the hydrogen fueled mobility and the dispenser,
wherein the information on the first communication protocol includes one or more of an index of the first communication protocol, a name of the first communication protocol, a version of the first communication protocol, or a preference for the first communication protocol,
wherein the message including the information on the second communication protocol further includes information on whether negotiating the communication protocol was successful.

15. The communication device as claimed in claim 13, wherein, when negotiating the fueling protocol, the processor is configured to:
transmit a message including information on a first fueling protocol applicable in the hydrogen fueled mobility to the dispenser based on a result of a communication protocol negotiation; and
receive a message including information on a second fueling protocol determined from common fueling protocols commonly applicable in both the hydrogen fueled mobility and the dispenser from the dispenser,
wherein the information on the first fueling protocol includes one or more of an index of the first fueling protocol, a name of the first fueling protocol, a version of the first fueling protocol, a sub-protocol of the first fueling protocol, or a preference for the first fueling protocol,
wherein the message including the information on the second fueling protocol further includes information on whether negotiating the fueling protocol was successful.

16. The communication device as claimed in claim 13, wherein, when negotiating the fueling parameter, the processor is configured to:
transmit a message, to the dispenser, including information on fueling parameters of a hydrogen fueled mobility side required by a second fueling protocol determined as a result of a fueling protocol negotiation;
receive a message, from the dispenser, including compatibility information of a dispenser side for the fueling parameters of the hydrogen fueled mobility side;
receive a message, from the dispenser, including information on fueling parameters of a dispenser side required by the second fueling protocol determined as a result of a fueling protocol negotiation; and
transmit a message, to the dispenser, including compatibility information of the hydrogen fueled mobility side for the fueling parameters of the dispenser side.

17. The communication device as claimed in claim 13, wherein the processor, when executing the at least one instruction, is further configured to:
when it is determined during a fueling parameter negotiation that the fueling parameter is incompatible between the hydrogen fueled mobility and the dispenser, renegotiate one or more of the communication protocol or the fueling parameter.

18. The communication device as claimed in claim 13, wherein the processor, when executing the at least one instruction, is further configured to:
when it is determined during a fueling parameter negotiation that the fueling parameter is incompatible between the hydrogen fueled mobility and the dispenser, determine a third communication protocol and a third fueling protocol based on a prescribed policy; and
allow a supply of hydrogen based on the third communication protocol and the third fueling protocol.

19. The communication device as claimed in claim 13, wherein the processor, when executing the at least one instruction, is further configured to:
when it is determined during a fueling parameter negotiation that the fueling parameter is incompatible between the hydrogen fueled mobility and the dispenser, terminate a communication between the dispenser and the hydrogen fueled mobility.

20. The communication device as claimed in claim 13, wherein the processor, when executing the at least one instruction, is further configured to:
perform a discovery and pairing process with the dispenser using a first communication technology,
wherein, when a result of a communication protocol negotiation is related to a second communication technology, the processor negotiates the fueling protocol and the fueling parameter using the second communication technology,
wherein, while the discovery and pairing process is performed, information on interoperability or compatibility between the hydrogen fueled mobility and the dispenser is shared.

21. A communication method for hydrogen fueling performed by a dispenser supplying hydrogen to a hydrogen fueled mobility, comprising:
negotiating a communication protocol with the hydrogen fueled mobility;
negotiating a fueling protocol for supplying hydrogen as fuel to the hydrogen fueled mobility with the hydrogen fueled mobility; and
negotiating a fueling parameter based on the fueling protocol with the hydrogen fueled mobility.

22. A communication device for hydrogen fueling arranged in a dispenser supplying hydrogen to a hydrogen fueled mobility, comprising:
a memory storing at least one instruction; and
a processor executing the at least one instruction,
wherein the processor, when executing the at least one instruction, is configured to:
negotiate a communication protocol with the hydrogen fueled mobility;
negotiate a fueling protocol for supplying hydrogen as fuel to the hydrogen fueled mobility with the hydrogen fueled mobility; and
negotiate a fueling parameter based on the fueling protocol with the hydrogen fueled mobility.
